# EUROPEAN PATENT APPLICATION

(11) **EP 4 808 132 A1**
(43) Date of publication of application: **16.09.2026**
(21) Application number: 26163540.3
(22) Date of filing: 10.03.2026
(51) Int. Cl.: H04N 21/426, H04N 21/438, H04N 21/443, H04N 21/462

(54) **IMAGE DISPLAY APPARATUS**

(30) Priority: 10.03.2025 WO PCT/KR2025/003129
(71) Applicant: LG Electronics Inc., Yeongdeungpo-gu Seoul 07336 (KR)
(72) Inventor: AHN, Kwangrim, Seoul (KR); OH, Jaewon, Seoul (KR)
(74) Representative: Schott, Jakob Valentin

(57) **Abstract**

An image display apparatus is disclosed. An image display apparatus according to an embodiment of the present disclosure includes: a display; a content receiver configured to receive a plurality of contents; and a signal processing device configured to output an image signal to the display, and the signal processing device is configured to execute an application for reproducing the plurality of contents, and in response to switching a content reproduction player being required upon a switching input between the plurality of contents, change a content reproduction player executed in the application. Accordingly, it is possible to perform seamless switching in response to switching between the contents.

## Description

### BACKGROUND

### 1. Field

The present disclosure relates to an image display apparatus, and more particularly, to an image display apparatus capable of performing seamless switching in response to switching between contents.

### 2. Description of the Related Art

An image display apparatus is an apparatus that displays an image through a display.

Meanwhile, the image display apparatus can receive a broadcast signal corresponding to a broadcast channel and display a broadcast image corresponding to the broadcast signal.
for displaying the broadcast image of the broadcast channel, different players can be used for each broadcast channel.

Meanwhile, there is a disadvantage that switching of a player is required in response to switching the broadcast channel, and it takes a considerable amount of time in response to switching the player.

### SUMMARY

An object of the present disclosure is to provide an image display apparatus capable of performing seamless switching in response to switching between contents.

Another object of the present disclosure is to provide an image display apparatus capable of performing seamless switching in response to switching between heterogeneous contents.

In accordance with an embodiment of the present disclosure, an image display apparatus includes: a display; a content receiver configured to receive a plurality of contents; and a signal processing device configured to output an image signal to the display, and the signal processing device is configured to execute an application for reproducing the plurality of contents, in response to switching a content reproduction player being required upon a switching input between the plurality of contents, change a content reproduction player executed in the application, and in response to the content reproduction player (921,923,925,927) executed in the application being changed, deactivate a video window of the content playback player being played and activate a video window of the content playback player being switched.

Meanwhile, the signal processing device can be configured to execute a first content reproduction player corresponding to a first content in the application, and in response to execution of a second content reproduction player corresponding to a second content being required based on the switching input between the plurality of contents, execute the second content reproduction player in the application.

Meanwhile, the signal processing device can execute the second content reproduction player during the execution of the first content reproduction player in the application in response to the switching input between the plurality of contents.

Meanwhile, the signal processing device can be configured to execute the first content reproduction player and the second content reproduction player simultaneously according to the switching input between the plurality of contents, and then terminate the execution of the first content reproduction player, and execute the second content reproduction player.

Meanwhile, the plurality of contents can include a plurality of broadcast channels, and the signal processing device can be configured to execute a first application for reproducing the plurality of broadcast channels, and change, in response to switching a content reproduction player being required upon the switching input between the plurality of contents, the content reproduction player executed in the first application.

Meanwhile, the signal processing device can be configured to execute a first content reproduction player corresponding to a first broadcast channel in the first application, and in response to execution of a second content reproduction player corresponding to a second broadcast channel being required based on the switching input between the plurality of contents, execute the second content reproduction player in the first application.

Meanwhile, the signal processing device can execute the second content reproduction player during the execution of the first content reproduction player in the first application in response to the switching input between the plurality of contents.

Meanwhile, the signal processing device can be configured to execute the first content reproduction player and the second content reproduction player simultaneously according to the switching input between the plurality of contents, and then terminate the execution of the first content reproduction player, and execute the second content reproduction player.

Meanwhile, the plurality of contents can include an image content and an audio content, and the signal processing device is configured to execute a first application for reproducing the image content and the audio content, and change, in response to switching a content reproduction player being required upon a switching input between the image content and the audio content, the content reproduction player executed in the first application.

Meanwhile, the signal processing device can be configured to execute a first content reproduction player corresponding to an image content in the first application, and in response to execution of a second content reproduction player corresponding to the audio content being required, execute the second content reproduction player during the execution of the first content reproduction player, in response to the switching input between the image content and the audio content.

Meanwhile, the signal processing device can be configured to execute a plurality of content reproduction player in the application, and execute a frame manager to operate based on a web, and executes a corresponding content reproduction player for each content.

Meanwhile, the frame manager can be configured to update, restart, or re-execution of at least one of the plurality of content reproduction players.

Meanwhile, the frame manager can be configured to continuously or simultaneously execute the plurality of content reproduction players in the application based on an inline frame based on the web.

Meanwhile, the frame manager can be configured to receive a content switching request, and change the content reproduction player executed in the application in response to switching the content reproduction player being required according to the content switching request.

Meanwhile, the frame manager can be configured to receive the content switching request, and, in response to switching the content reproduction player being required according to the content switching request, execute at least two content reproduction players during a predetermined period.

Meanwhile, the signal processing device can be configured to change an object related to reproduction of a content in response to the content reproduction player being switched.

Meanwhile, the signal processing device can be configured to execute a plurality of content reproduction player in the application in response to executing the application, and stop outputting a first image signal based on the first content reproduction player being executed, and output a second image signal based on the second content reproduction player being executed, upon the switching input between the plurality of contents.

Meanwhile, the signal processing device can be configured to execute the remaining content reproduction players other than some content reproduction players, in response to some content reproduction players among the plurality of content reproduction players in the application being not executed during a set period.

Meanwhile, the signal processing device can be configured to set a priority based on at least one of a driving time, the number of channels, a recent usage history, a processor usage rate, or a memory usage rate of the plurality of content reproduction players in the application, and selectively execute some of the plurality of content reproduction players in response to executing the application based on the set priority.

Meanwhile, the signal processing device can be configured to set the content reproduction player executed in the application based on a first content list for a first user, and change the content reproduction player executed in the application based on a second content list for a second user.

Meanwhile, the signal processing device can be configured to set the number of content reproduction players executed in the application as a first number based on the first content list for the first user, and set the number of content reproduction players executed in the application as a second number based on the second content list for the second user.

### BRIEF DESCRIPTION OF THE DRAWINGS

The above and other objects, features and other advantages of the present disclosure will be more clearly understood from the following detailed description taken in conjunction with the accompanying drawings, in which:
FIG. 1 is a diagram showing an image display apparatus according to an embodiment of the present disclosure;
FIG. 2 is an example of an internal block diagram of the image display apparatus;
FIG. 3 is an example of an internal block diagram of a signal processing device of FIG. 2;
FIG. 4A is a diagram showing a method of controlling a remote controller of FIG. 2;
FIG. 4B is an internal block diagram of the remote controller of FIG. 2;
FIG. 5 illustrates another example of an internal block diagram of the image display apparatus of FIG. 1;
FIG. 6 illustrates an example of an internal block diagram of an image display apparatus according to an embodiment of the present disclosure;
FIG. 7 illustrates an example of a home screen of an image display apparatus according to an embodiment of the present disclosure;
FIGS. 8A and 8B are diagrams referred to in the description of an operation of an image display apparatus related to the present disclosure;
FIG. 9A is a diagram referred to in an example of the description of the operation of the image display apparatus according to an embodiment of the present disclosure;
FIGS. 9B to 12D are diagrams referred to in the description of FIG. 9A; and
FIGS. 13A to 14B are diagrams referred to in various examples of the description of the operation of the image display apparatus according to an embodiment of the present disclosure.

### DETAILED DESCRIPTION OF THE PREFERRED EMBODIMENTS

Hereinafter, the present disclosure will be described in detail with reference to the accompanying drawings.

Regarding constituent elements used in the following description, suffixes "module" and "unit" are given only in consideration of ease in the preparation of the specification, and do not have or serve as different meanings. Accordingly, the suffixes "module" and "unit" can be used interchangeably.

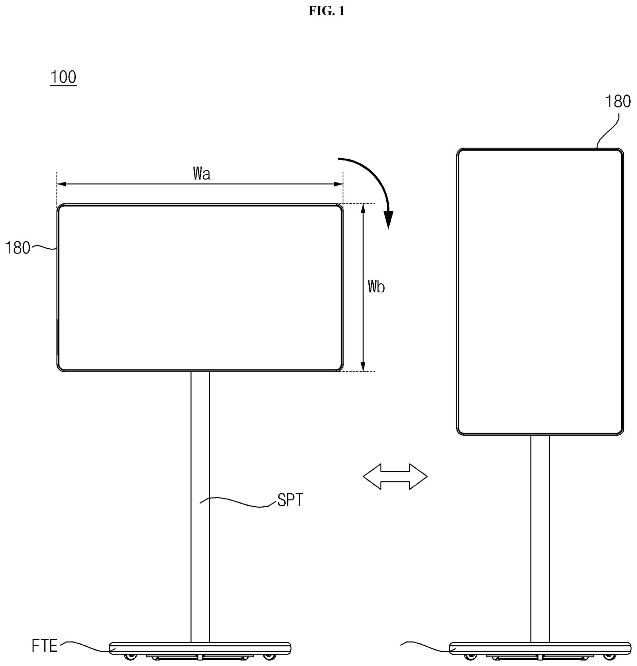

FIG. 1 is a diagram showing an image display apparatus according to an embodiment of the present disclosure.

Referring to FIG. 1, an image display apparatus 100 according to an embodiment of the present disclosure comprises a display 180.

Meanwhile, the image display apparatus 100 can further include a base FTE, and a support frame SPT supporting between the base FTE and the display 180.

Meanwhile, the image display apparatus 100 can be a movable image display apparatus.

For example, at least one wheel is disposed below the base FTE to operate in the case in which the image display apparatus 100 moves.

Meanwhile, the display 180 in the image display apparatus 100 according to an embodiment of the present disclosure can be rotatable.

For example, the display 180 in the image display apparatus 100 rotates in a horizontal mode in which a screen ratio is Wa:Wb, which can be switched to a vertical mode in which the screen ratio is Wb:Wa.

As another example, the display 180 in the image display apparatus 100 rotates in the vertical mode in which the screen ratio is Wb:Wa, which can be switched to the horizontal mode in which the screen ratio is Wa:Wb.

Meanwhile, the image display apparatus 100 of FIG. 1 can be a TV, a monitor, etc.

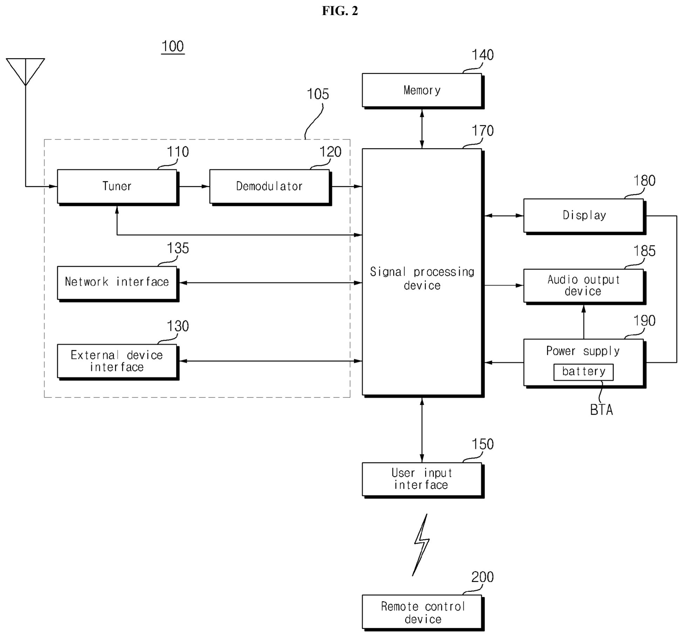

FIG. 2 is an example of an internal block diagram of the image display apparatus of FIG. 1.

Referring to FIG. 2, the image display apparatus 100 according to an embodiment of the present disclosure comprises a content receiver 105, an external apparatus interface 130, a memory 140, a user input interface 150, a sensor device (not shown), a signal processing device 170, a display 180, and an audio output device 185.

The content receiver 105 can include a tuner 110, a demodulator 120, a network interface 135, and an external apparatus interface 130.

Meanwhile, unlike the figure, the content receiver 105 can include only the tuner 110, the demodulator 120, and the external apparatus interface 130. That is, the network interface 135 cannot be included.

Meanwhile, the content receiver 105 can receive a broadcast signal or an audio signal through the tuner 110 and the demodulator 120, receive an image signal or an audio signal through the network interface 135, or receive an image signal or an audio signal through the external apparatus interface 130.

The tuner 110 selects an RF broadcast signal corresponding to a channel selected by a user or all pre-stored channels among radio frequency (RF) broadcast signals received through an antenna (not shown). In addition, the selected RF broadcast signal is converted into an intermediate frequency signal, a baseband image, or an audio signal.

For example, the tuner 110 converts the selected RF broadcasting signal into a digital IF signal (DIF) in the case in which the selected RF broadcasting signal is a digital broadcasting signal, and converts the selected RF broadcasting signal into an analog baseband image or voice signal (CVBS/SIF) in the case in which the selected RF broadcasting signal is an analog broadcasting signal. That is, the tuner 110 can process the digital broadcasting signal or the analog broadcasting signal. The analog baseband image or voice signal outputted from the tuner 110 can be directly inputted into the signal processing device 170.

Meanwhile, the tuner 110 can include a plurality of tuners for receiving broadcast signals of a plurality of channels. Alternatively, a single tuner that simultaneously receives broadcast signals of a plurality of channels is also available.

The demodulator 120 receives the converted digital IF signal DIF from the tuner 110 and performs a demodulation operation.

The demodulator 120 can be configured to perform demodulation and channel decoding and then output a stream signal TS. At this time, the stream signal can be a multiplexed signal of an image signal, an audio signal, or a data signal.

The stream signal output from the demodulator 120 can be input to the signal processing device 170. The signal processing device 170 performs demultiplexing, image/audio signal processing, and the like, and then outputs an image to the display 180 and outputs audio to the audio output device 185.

The external apparatus interface 130 can be configured to transmit or receive data with a connected external apparatus (not shown), e.g., a set-top box 50. To this end, the external apparatus interface 130 can include an A/V input and output device (not shown).

The external apparatus interface 130 can be connected in wired or wirelessly to an external apparatus, such as a digital versatile disk (DVD), a Blu ray, a game equipment, a camera, a camcorder, a computer (note book), and a set-top box, and can be configured to perform an input/output operation with an external apparatus.

The A/V input and output device can be configured to receive image and audio signals from an external apparatus. Meanwhile, a wireless transceiver (not shown) can be configured to perform short-range wireless communication with other electronic apparatus.

Through the wireless transceiver (not shown), the external apparatus interface 130 can exchange data with an adjacent mobile terminal 600. In particular, in a mirroring mode, the external apparatus interface 130 can be configured to receive device information, executed application information, application image, and the like from the mobile terminal 600.

The network interface 135 provides an interface for connecting the image display apparatus 100 to a wired/wireless network including the Internet network. For example, the network interface 135 can be configured to receive, via the network, content or data provided by the Internet, a content provider, or a network operator.

Meanwhile, the network interface 135 can include a wireless transceiver (not shown).

The memory 140 can store a program for each signal processing and control in the signal processing device 170, and can store signal-processed image, audio, or data signal.

In addition, the memory 140 can serve to temporarily store image, audio, or data signal input to the external apparatus interface 130. In addition, the memory 140 can store information on a certain broadcast channel through a channel memory function, such as a channel map.

Although FIG. 2 illustrates that the memory is provided separately from the signal processing device 170, the scope of the present disclosure is not limited thereto. The memory 140 can be included in the signal processing device 170.

The user input interface 150 transmits a signal input by the user to the signal processing device 170 or transmits a signal from the signal processing device 170 to the user.

For example, it can be configured to transmit/receive a user input signal, such as power on/off, channel selection, screen setting, etc., from a remote controller 200, can transfer a user input signal input from a local key (not shown), such as a power key, a channel key, a volume key, a set value, etc., to the signal processing device 170, can transfer a user input signal input from a sensor device (not shown) that senses a user's gesture to the signal processing device 170, or can be configured to transmit a signal from the signal processing device 170 to the sensor device (not shown).

The signal processing device 170 can demultiplex the input stream through the tuner 110, the demodulator 120, the network interface 135, or the external apparatus interface 130, or process the demultiplexed signals to generate and output a signal for image or audio output.

For example, the signal processing device 170 receives a broadcast signal received by the content receiver 105 or an HDMI signal, and perform signal processing based on the received broadcast signal or the HDMI signal to thereby output a processed image signal.

The image signal processed by the signal processing device 170 is input to the display 180, and can be displayed as an image corresponding to the image signal. In addition, the image signal processed by the signal processing device 170 can be input to the external output apparatus through the external apparatus interface 130.

The audio signal processed by the signal processing device 170 can be output to the audio output device 185 as an audio signal. In addition, audio signal processed by the signal processing device 170 can be input to the external output apparatus through the external apparatus interface 130.

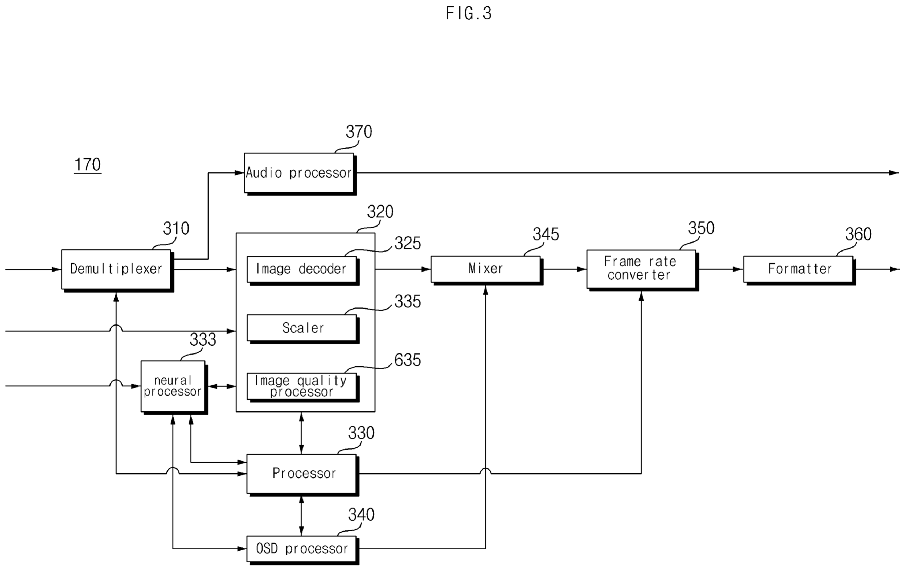

Although not shown in FIG. 2, the signal processing device 170 can include a demultiplexer, an image processor, and the like. That is, the signal processing device 170 can be configured to perform a variety of signal processing and thus it can be implemented in the form of a system on chip (SOC). This will be described later with reference to FIG. 3.

In addition, the signal processing device 170 can control the overall operation of the image display apparatus 100. For example, the signal processing device 170 can control the tuner 110 to control the tuning of the RF broadcast corresponding to the channel selected by the user or the previously stored channel.

In addition, the signal processing device 170 can control the image display apparatus 100 according to a user command input through the user input interface 150 or an internal program.

Meanwhile, the signal processing device 170 can control the display 180 to display an image. At this time, the image displayed on the display 180 can be a still image or a moving image, and can be a 2D image or a 3D image.

Meanwhile, the signal processing device 170 can display a certain object in an image displayed on the display 180. For example, the object can be at least one of a connected web screen (newspaper, magazine, etc.), an electronic program guide (EPG), various menus, a widget, an icon, a still image, a moving image, and a text.

Meanwhile, the signal processing device 170 can recognize the position of the user based on the image photographed by a photographing device (not shown). For example, the distance (z-axis coordinate) between a user and the image display apparatus 100 can be determined. In addition, the x-axis coordinate and the y-axis coordinate on the display 180 corresponding to a user position can be determined.

The display 180 generates a driving signal by converting an image signal, a data signal, an OSD signal, a control signal processed by the signal processing device 170, an image signal, a data signal, a control signal, and the like received from the external apparatus interface 130.

Meanwhile, the display 180 can be configured as a touch screen and used as an input device in addition to an output device.

The audio output device 185 receives a signal processed by the signal processing device 170 and outputs it as an audio.

The photographing device (not shown) photographs a user. The photographing device (not shown) can be implemented by a single camera, but the present disclosure is not limited thereto and can be implemented by a plurality of cameras. Image information photographed by the photographing device (not shown) can be input to the signal processing device 170.

The signal processing device 170 can sense a gesture of the user based on each of the images photographed by the photographing device (not shown), the signals detected from the sensor device (not shown), or a combination thereof.

The power supply 190 supplies corresponding power to the image display apparatus 100.

Particularly, the power can be supplied to a signal processing device 170 which can be implemented in the form of a system on chip (SOC), a display 180 for displaying an image, and an audio output device 185 for outputting an audio.

Specifically, the power supply 190 can include a converter to convert the level of the input voltage.

For example, the power supply 190 can include an ac/dc converter and a dc/dc converter in the case in which the input voltage is an alternating current voltage.

As another example, the power supply 190 can include the dc/dc converter in the case in which the input voltage is a direct current voltage.

Meanwhile, the power supply 190 includes the battery BTA.

The remote controller 200 transmits the user input to the user input interface 150. To this end, the remote controller 200 can use Bluetooth, a radio frequency (RF) communication, an infrared (IR) communication, an Ultra Wideband (UWB), ZigBee, or the like. In addition, the remote controller 200 can be configured to receive the image, audio, or data signal output from the user input interface 150, and display it on the remote controller 200 or output it as an audio.

Meanwhile, the image display apparatus 100 can be a fixed or mobile digital broadcast receiver capable of receiving digital broadcast.

Meanwhile, a block diagram of the image display apparatus 100 shown in FIG. 2 is a block diagram for an embodiment of the present disclosure. Each component of the block diagram can be integrated, added, or omitted according to a specification of the image display apparatus 100 actually implemented. That is, two or more components can be combined into a single component as needed, or a single component can be split into two or more components. The function performed in each block is described for the purpose of illustrating embodiments of the present disclosure, and specific operation and apparatus do not limit the scope of the present disclosure.

FIG. 3 is an example of an internal block diagram of the signal processing device in FIG. 2.

Referring to the figure, the signal processing device 170 according to an embodiment of the present disclosure can include a demultiplexer 310, an image processor 320, a processor 330, and an audio processor 370. In addition, the signal processing device 170 can further include and a data processor (not shown).

The demultiplexer 310 demultiplexes the input stream. For example, in the case in which an MPEG-2 TS is input, it can be demultiplexed into image, audio, and data signal, respectively. Here, the stream signal input to the demultiplexer 310 can be a stream signal output from the tuner 110, the demodulator 120, or the external apparatus interface 130.

The image processor 320 can be configured to perform signal processing on an input image. For example, the image processor 320 can be configured to perform image processing on an image signal demultiplexed by the demultiplexer 310.

To this end, the image processor 320 can include an image decoder 325, a scaler 335, an image quality processor 635, an image encoder (not shown), a graphic processor 340, a frame rate converter 350, a formatter 360, etc.

The image decoder 325 decodes a demultiplexed image signal, and the scaler 335 performs scaling so that the resolution of the decoded image signal can be output from the display 180.

The image decoder 325 can include a decoder of various standards. For example, a 3D image decoder for MPEG-2, H.264 decoder, a color image, and a depth image, and a decoder for a multiple view image can be provided.

The scaler 335 can scale an input image signal decoded by the image decoder 325 or the like.

For example, if the size or resolution of an input image signal is small, the scaler 335 can upscale the input image signal, and, if the size or resolution of the input image signal is great, the scaler 335 can downscale the input image signal.

The image quality processor 635 can be configured to perform image quality processing on an input image signal decoded by the image decoder 325 or the like.

For example, the image quality processor 625 can be configured to perform noise reduction processing on an input image signal, extend a resolution of high gray level of the input image signal, perform image resolution enhancement, perform high dynamic range (HDR)-based signal processing, change a frame rate, perform image quality processing suitable for properties of a panel, especially an OLED panel, etc.

The graphic processor 340 generates an OSD signal according to a user input or by itself. For example, based on a user input signal, the graphic processor 340 can generate a signal for displaying various information as a graphic or a text on the screen of the display 180. The generated OSD signal can include various data, such as a user interface screen of the image display apparatus 100, various menu screens, a widget, and an icon. In addition, the generated OSD signal can include a 2D object or a 3D object.

In addition, the graphic processor 340 can generate a pointer that can be displayed on the display, based on a pointing signal input from the remote controller 200. In particular, such a pointer can be generated by a pointing signal processing device, and the graphic processor 340 can include such a pointing signal processing device (not shown). Obviously, the pointing signal processing device (not shown) can be provided separately from the graphic processor 340.

The frame rate converter (FRC) 350 can be configured to convert a frame rate of an input image. Meanwhile, the frame rate converter 350 can output the input image without converting the frame rate.

Meanwhile, the formatter 360 can change a format of an input image signal into a format suitable for displaying the image signal on a display and output the image signal in the changed format.

In particular, the formatter 360 can change a format of an image signal to correspond to a display panel.

Meanwhile, the formatter 360 can also change the format of the video signal.

The processor 330 can control overall operations of the image display apparatus 100 or the signal processing device 170.

For example, the processor 330 can control the tuner 110 to control the tuning of an RF broadcast corresponding to a channel selected by a user or a previously stored channel.

In addition, the processor 330 can control the image display apparatus 100 according to a user command input through the user input interface 150 or an internal program.

In addition, the processor 330 can be configured to transmit data to the network interface 135 or to the external apparatus interface 130.

In addition, the processor 330 can control the demultiplexer 310, the image processor 320, and the like in the signal processing device 170.

Meanwhile, the audio processor 370 in the signal processing device 170 can be configured to perform the audio processing of the demultiplexed audio signal. To this end, the audio processor 370 can include various decoders.

In addition, the audio processor 370 in the signal processing device 170 can process a base, a treble, a volume control, and the like.

The data processor (not shown) in the signal processing device 170 can be configured to perform data processing of the demultiplexed data signal. For example, in the case in which the demultiplexed data signal is a coded data signal, it can be decoded. The encoded data signal can be electronic program guide information including broadcast information, such as a start time and an end time of a broadcast program broadcasted on each channel.

Meanwhile, a block diagram of the signal processing device 170 shown in FIG. 3 is a block diagram for an embodiment of the present disclosure. Each component of the block diagram can be integrated, added, or omitted according to a specification of the signal processing device 170 actually implemented.

In particular, the frame rate converter 350 and the formatter 360 can be provided separately in addition to the image processor 320.

Meanwhile, the signal processing device 170 according to an exemplary embodiment of the present disclosure can further include a neural network processor 333 for learning processing, etc.

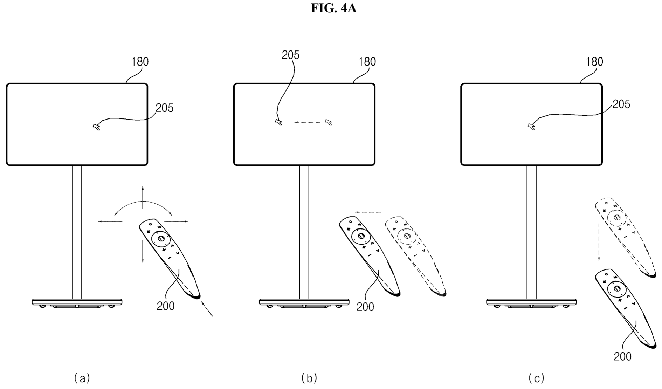

FIG. 4A is a diagram illustrating a control method of a remote controller of FIG. 2.

As shown in FIG. 4A(a), it is illustrated that a pointer 205 corresponding to the remote controller 200 is displayed on the display 180.

The user can move or rotate the remote controller 200 up and down, left and right (FIG. 4A(b)), and back and forth (FIG. 4A(c)). The pointer 205 displayed on the display 180 of the image display apparatus corresponds to the motion of the remote controller 200. Such a remote controller 200 can be referred to as a space remote controller or a 3D pointing apparatus, because the pointer 205 is moved and displayed according to the movement in a 3D space, as shown in the figure.

FIG. 4A(b) illustrates that in the case in which the user moves the remote controller 200 to the left, the pointer 205 displayed on the display 180 of the image display apparatus also moves to the left correspondingly.

Information on the motion of the remote controller 200 detected through a sensor of the remote controller 200 is transmitted to the image display apparatus. The image display apparatus can calculate the coordinate of the pointer 205 from the information on the motion of the remote controller 200. The image display apparatus can display the pointer 205 to correspond to the calculated coordinate.

FIG. 4A(c) illustrates a case where the user moves the remote controller 200 away from the display 180, while pressing a specific button of the remote controller 200. Thus, a selection area within the display 180 corresponding to the pointer 205 can be zoomed in so that it can be displayed to be enlarged. Meanwhile, in the case in which the user moves the remote controller 200 close to the display 180, the selection area within the display 180 corresponding to the pointer 205 can be zoomed out so that it can be displayed to be reduced. Meanwhile, in the case in which the remote controller 200 moves away from the display 180, the selection area can be zoomed out, and in the case in which the remote controller 200 approaches the display 180, the selection area can be zoomed in.

Meanwhile, in the case in which the specific button of the remote controller 200 is pressed, it is possible to exclude the recognition of vertical and lateral movement. That is, in the case in which the remote controller 200 moves away from or approaches the display 180, the up, down, left, and right movements are not recognized, and only the forward and backward movements are recognized. Only the pointer 205 is moved according to the up, down, left, and right movements of the remote controller 200 in a state where the specific button of the remote controller 200 is not pressed.

Meanwhile, the moving speed or the moving direction of the pointer 205 can correspond to the moving speed or the moving direction of the remote controller 200.

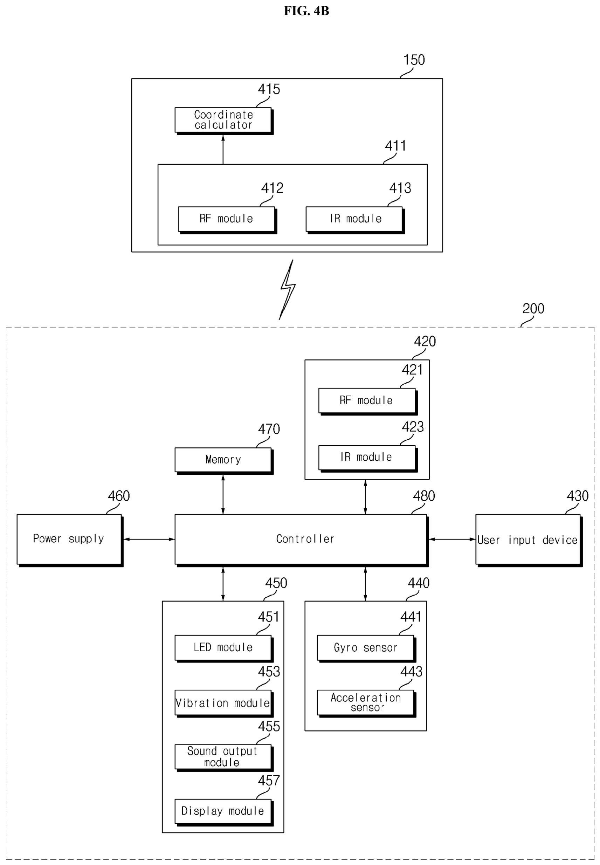

FIG. 4B is an internal block diagram of the remote controller of FIG. 2.

Referring to the figure, the remote controller 200 includes a wireless transceiver 425, a user input device 435, a sensor device 440, an output device 450, a power supply 460, a memory 470, and a controller 480.

The wireless transceiver 425 transmits/receives a signal to/from any one of the image display apparatuses according to the embodiments of the present disclosure described above. Among the image display apparatuses according to the embodiments of the present disclosure, one image display apparatus 100 will be described as an example.

In the present embodiment, the remote controller 200 can include an RF module 421 for transmitting and receiving signals to and from the image display apparatus 100 according to a RF communication standard. In addition, the remote controller 200 can include an IR module 423 for transmitting and receiving signals to and from the image display apparatus 100 according to a IR communication standard.

In the present embodiment, the remote controller 200 transmits a signal containing information on the motion of the remote controller 200 to the image display apparatus 100 through the RF module 421.

In addition, the remote controller 200 can be configured to receive the signal transmitted by the image display apparatus 100 through the RF module 421. In addition, if necessary, the remote controller 200 can be configured to transmit a command related to power on/off, channel change, volume change, and the like to the image display apparatus 100 through the IR module 423.

The user input device 435 can be implemented by a keypad, a button, a touch pad, a touch screen, or the like. The user can operate the user input device 435 to input a command related to the image display apparatus 100 to the remote controller 200. in the case in which the user input device 435 includes a hard key button, the user can input a command related to the image display apparatus 100 to the remote controller 200 through a push operation of the hard key button. in the case in which the user input device 435 includes a touch screen, the user can touch a soft key of the touch screen to input the command related to the image display apparatus 100 to the remote controller 200. In addition, the user input device 435 can include various types of input means, such as a scroll key, a jog key, etc., which can be operated by the user, and the present disclosure does not limit the scope of the present disclosure.

The sensor device 440 can include a gyro sensor 441 or an acceleration sensor 443. The gyro sensor 441 can sense information regarding the motion of the remote controller 200.

For example, the gyro sensor 441 can sense information on the operation of the remote controller 200 based on the x, y, and z axes. The acceleration sensor 443 can sense information on the moving speed of the remote controller 200. Meanwhile, a distance measuring sensor can be further provided, and thus, the distance to the display 180 can be sensed.

The output device 450 can output an image or an audio signal corresponding to the operation of the user input device 435 or a signal transmitted from the image display apparatus 100. Through the output device 450, the user can recognize whether the user input device 435 is operated or whether the image display apparatus 100 is controlled.

For example, the output device 450 can include an LED module 451 that is turned on in the case in which the user input device 435 is operated or a signal is transmitted/received to/from the image display apparatus 100 through the wireless transceiver 425, a vibration module 453 for generating a vibration, an audio output module 455 for outputting an audio, or a display module 457 for outputting an image.

The power supply 460 supplies power to the remote controller 200. in the case in which the remote controller 200 is not moved for a certain time, the power supply 460 can stop the supply of power to reduce a power waste. The power supply 460 can resume power supply in the case in which a certain key provided in the remote controller 200 is operated.

The memory 470 can store various types of programs, application data, and the like necessary for the control or operation of the remote controller 200. If the remote controller 200 wirelessly transmits and receive a signal to/from the image display apparatus 100 through the RF module 421, the remote controller 200 and the image display apparatus 100 transmit and receive a signal through a certain frequency band. The controller 480 of the remote controller 200 can store information regarding a frequency band or the like for wirelessly transmitting and receiving a signal to/from the image display apparatus 100 paired with the remote controller 200 in the memory 470 and can refer to the stored information.

The controller 480 controls various matters related to the control of the remote controller 200. The controller 480 can be configured to transmit a signal corresponding to a certain key operation of the user input device 435 or a signal corresponding to the motion of the remote controller 200 sensed by the sensor device 440 to the image display apparatus 100 through the wireless transceiver 425.

The user input interface 150 of the image display apparatus 100 includes a wireless transceiver 151 that can wirelessly transmit and receive a signal to and from the remote controller 200 and a coordinate value calculator 415 that can calculate the coordinate value of a pointer corresponding to the operation of the remote controller 200.

The user input interface 150 can wirelessly transmit and receive a signal to and from the remote controller 200 through the RF module 412. In addition, the user input interface 150 can be configured to receive a signal transmitted by the remote controller 200 through the IR module 413 according to a IR communication standard.

The coordinate value calculator 415 can correct a hand shake or an error from a signal corresponding to the operation of the remote controller 200 received through the wireless transceiver 151 and calculate the coordinate value (x, y) of the pointer 205 to be displayed on the display 180.

The transmission signal of the remote controller 200 inputted to the image display apparatus 100 through the user input interface 150 is transmitted to the controller 180 of the image display apparatus 100. The controller 180 can determine the information on the operation of the remote controller 200 and the key operation from the signal transmitted from the remote controller 200, and, correspondingly, control the image display apparatus 100.

For another example, the remote controller 200 can calculate the pointer coordinate value corresponding to the operation and output it to the user input interface 150 of the image display apparatus 100. In this case, the user input interface 150 of the image display apparatus 100 can be configured to transmit information on the received pointer coordinate value to the controller 180 without a separate correction process of hand shake or error.

For another example, unlike the figure, the coordinate value calculator 415 can be provided in the signal processing device 170, not in the user input interface 150.

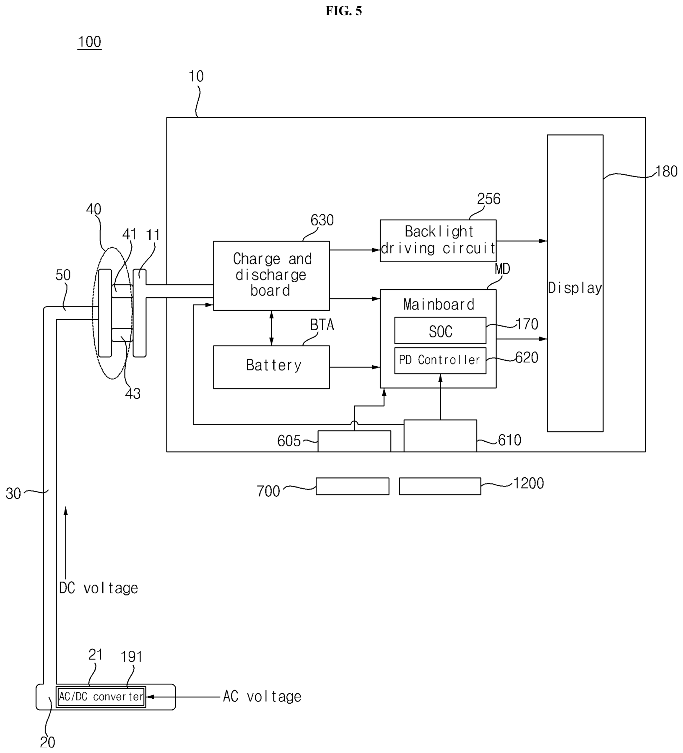

FIG. 5 illustrates another example of an internal block diagram of the image display apparatus of FIG. 1.

Referring to FIG. 5, the image display apparatus 100 according to an exemplary embodiment of the present disclosure can include stands 20, 30, 40, and 50, and a head 10.

The stands 20, 30, 40, and 50 can include a base 20, a pole 30, a rotary connector 40, and a support arm 50.

The stands 20, 30, 40, and 50 can be detachably coupled to the head 10.

The base 20 can include a power board 21. That is, the power board 21 can be embedded in the base 20.

Meanwhile, the power board 21 can be configured to receive an AC voltage from an external power supply connected through a plug CWa, and convert the received AC voltage into a DC voltage.

Meanwhile, the power board 21 can supply the DC voltage to the head 10 through one or more probe pins 41 and 43 included in a connector 40.

Meanwhile, the power board 21 can include an AC/DC converter 191 which can be configured to convert the AC voltage into the DC voltage.

Meanwhile, unlike FIG. 5, the AC/DC converter 191 is also enabled to be provided separately from the power board 21.

The power board 21 can detect whether the AC/DC converter 191 is connected, and generate a detection signal based on a detection result. The power board 21 can be configured to transmit the generated detection signal to a mainboard MD.

The rotary connector 40 can include one or more probe pins 41 and 43. One or more probe pins 41 and 43 can be pins which electrically connect the head 10 and the stands 20, 30, 40, and 50.

In FIG. 5, it is described as an example that the rotary connector 40 includes two probe pins 41 and 43, but this is just an example.

One or more probe pins 41 and 43 can be connected to a head connector 11 including one or more contact terminals which are in contact with one or more probe pins 41 and 43. The head connector 11 can be a probe pin socket into which the probe pins 41 and 43 are inserted to form an electrical contact.

The head 10 can include the head connector 11, a charge and discharge board 630, a battery BTA, a backlight driving circuit 256, the mainboard MD, and a display 180.

The head connector 11 can include one or more contact terminal for an electrical contact with one or more probe pins 41 and 43.

The head connector 11 can provide the DC voltage supplied from one or more probe pins 41 and 43 to the charge and discharge board 630 through one or more contact terminals.

The head connector 11 can be an interface for an electrical connection between one or more probe pins 41 and 43, and the charge and discharge board 630.

The charge and discharge board 630 can provide the DC voltage supplied from the power board 21 to components provided in the head 10.

The charge and discharge board 630 can provide the DC voltage supplied from the power board 21 to at least one of the battery BTA, the backlight driving circuit 256, or the mainboard MD.

The battery BTA can supply the DC voltage to any one of the backlight driving circuit 256 or the mainboard MD.

The battery BTA can also be included in the charge and discharge board 630, and also provided separately from the charge and discharge board 630.

When the DC voltage from the AC/DC converter 191 is not supplied to the head 10, the battery BTA can supply the DC voltage to the head 10 through discharging.

When the display 180 includes a liquid crystal panel, the backlight driving circuit 256 can be a circuit for driving a backlight.

For example, the display 180 can include the liquid crystal panel, and a backlight outputting light to the liquid crystal panel. The backlight driving circuit 256 can control a light output of the backlight based on a dimming value.

The mainboard MD can control all operations of the head 10. The mainboard MD can include a signal processing device 170 and a power controller 620.

The display 180 can display an image based on an image signal from the signal processing device 170.

Meanwhile, when the display 180 includes an organic light emitting diode (OLED) display panel, the backlight driving circuit 256 cannot be included in the head 10.

Meanwhile, the head 10 includes a first interface 605 receiving an input signal from an input device 700 and a second interface 610 for wired connection with an external device 1200.

For example, when the input device 700 is a keyboard, the first interface 605 can include a USB terminal for receiving an input signal of the keyboard.

As another example, when the input device 700 is a mouse, the first interface 605 can include a USB terminal for receiving an input signal of the mouse.

As yet another example, when the input device 700 is a remote controller 200, the first interface 605 can include the user input interface 150 of FIG. 2 in order to receive a wireless signal from the remote controller 200.

As still yet another example, when the input device 700 is a game pad, the first interface 605 can include a USB terminal for receiving an input signal from the game pad.

Meanwhile, the second interface 610 can include a USB-C terminal.

Meanwhile, the second interface 610 can be configured to receive an image signal or an audio signal from the external device 1200 which is wiredly connected according to a display mode.

For example, the second interface 610 can be configured to transmit the DC voltage to the external device 1200 in response to receiving the image signal or audio signal from the external device 1200 which is wiredly connected according to the display mode.

As another example, the second interface 610 can be configured to receive the DC voltage from the external device 1200 in response to receiving the image signal or audio signal from the external device 1200 which is wiredly connected according to the display mode.

As yet another example, the second interface 610 can supply the DC voltage to the external device 1200 according to a source mode.

As still yet another example, the second interface 610 can be configured to receive the DC voltage from the external device 1200 according to a sink mode.

Meanwhile, the power controller 620 in the mainboard MD can detect whether the external device 1200 is connected through the second interface 610.

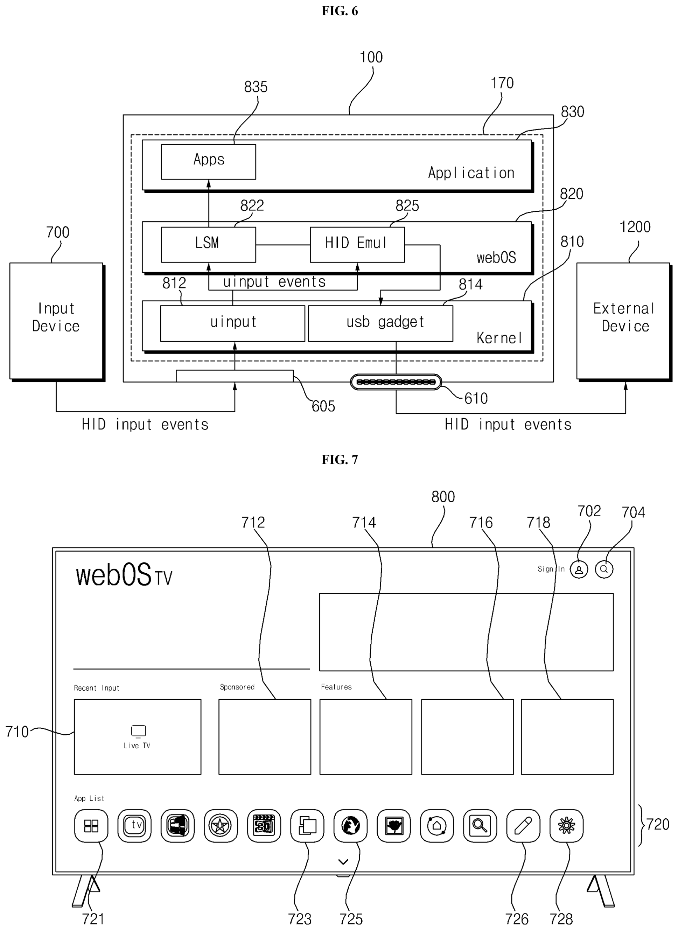

FIG. 6 illustrates another example of an internal block diagram of the signal processing device of FIG. 2.

Referring to the figure, the signal processing device 170 can execute a kernel 810, execute an operating system 820 on the kernel 810, and execute an application 835 on the operating system 820.

For example, the signal processing device 170 can be configured to execute the kernel 810, execute the operating system 820 based on a web on the kernel 810, execute an application layer 830 on the web-based operating system 820, and execute the application 835 in the application layer 830.

For example, the application 835 can be a broadcast application for displaying the broadcast image or a content application for displaying contents.

The signal processing device 170 can be configured to execute an emulator 825 to operate based on an input signal from the first interface 605, and transmit a signal corresponding to the input signal to the executed application 835 or transmit the corresponding signal to the external device 1200.

Accordingly, the application 835 can be controlled or the external device 1200 can be controlled based on the input signal from the input device 700. In particular, the application 835 can be controlled or the external device 1200 can be controlled based on various input signals.

At this time, the emulator 825 can be executed on the kernel 810 or executed within the operating system 820.

Meanwhile, the signal processing device 170 can be configured to execute the emulator 825 that converts the input signal from the first interface 605 into a data packet, and the second interface 610 can be configured to transmit the converted packet to the external device 1200. Accordingly, the signal processing device 170 can control the external device 1200 based on the input signal from the input device 700.

Meanwhile, the emulator 825 can be configured to receive the input signal from the first interface 605 through the kernel 810 or transmit the signal corresponding to the input signal to the external device 1200 through the kernel 810.

In particular, the emulator 825 can be configured to receive the input signal from the first interface 605 through an input interface 812 in the kernel 810 or transmit the signal corresponding to the input signal to the external device 1200 through a USB gadget interface 814 in the kernel 810.

Accordingly, the application 835 can be controlled or the external device 1200 can be controlled based on the input signal from the input device 700.

Meanwhile, the signal processing device 170 can be further configured to execute a manager 822 configured to determine whether to transmit the signal corresponding to the input signal to the application 835 or the external device 1200 based on the signal from the emulator 825.

Meanwhile, the manger 820 checks an operation state of the emulator 825 to determine whether to control the application 835.

For example, when the emulator 825 operates, the manger 820 can determine to transmit the input signal from the first interface 605 to the external device 1200, or to control the external device 1200.

As another example, the manger 820 can determine to transmit the input signal from the first interface 605 to control external device 1200, or to control the external device 1200, when displaying the external input image based on the image signal from the external device 1200.

As yet another example, the manger 820 can determine to transmit the input signal from the first interface 605 to the external device 1200, or to control the external device 1200, when there is a control request of the external device 1200.

As still yet another example, when the emulator 825 does not operate, the manger 820 can determine to transmit the input signal from the first interface 605 to the application 835, or to control the application 835.

Meanwhile, when controlling the external device 1200 is required, the emulator 825 in the signal processing device 170 can generate a virtual USB device through the USB gadget interface 814 in the kernel 810.

Accordingly, a role of the second interface 610 is changed to a USB device, and the external device 1200 can recognize the image display apparatus 100 as the USB device.

Meanwhile, when controlling the external device 1200 is required, the emulator 825 in the signal processing device 170 can be configured to convert the input signal from the first interface 605 into a data packet, and transmit the converted packet to the external device 1200. Accordingly, the application 835 can be controlled or the external device 1200 can be controlled based on the input signal from the input device 700.

FIG. 7 illustrates an example of a home screen of an image display apparatus according to an embodiment of the present disclosure.

Referring to the figure, the signal processing device 170 according to an embodiment of the present disclosure can control the display 180 to display a home screen 800.

For example, the signal processing device 170 can control a web OS-based home screen 800 to be displayed.

The home screen 800 can include a live content item 710 corresponding to a live content, and a broadcast channel item 723 corresponding to a broadcast channel application.

Specifically, the home screen 800 can include the live content item 710, an advertisement item 712 for displaying an advertisement image, a broadcast channel guide item 714, a home dashboard item 716, and a user guide item 718.

Meanwhile, the live content item 710 can correspond to a live content application for reproducing the live content.

Meanwhile, the home screen 800 can include an application list 720 including a plurality of application items.

The application list 720 can include an extension display item 721 of an application, a broadcast channel item 723 corresponding to a broadcast channel application, a web browser item 725 corresponding to a web browser application, an edit item 726, a setting item 728, and the like.

Meanwhile, the home screen 800 can include a user log-in item 702 and a search item 704.

Meanwhile, when the live content item 710 corresponding to the live content application for reproduction of the live content is executed or the broadcast channel item 723 corresponding to the broadcast channel application is executed, the signal processing device can control the broadcast image related to the content or the broadcast channel to be reproduced.

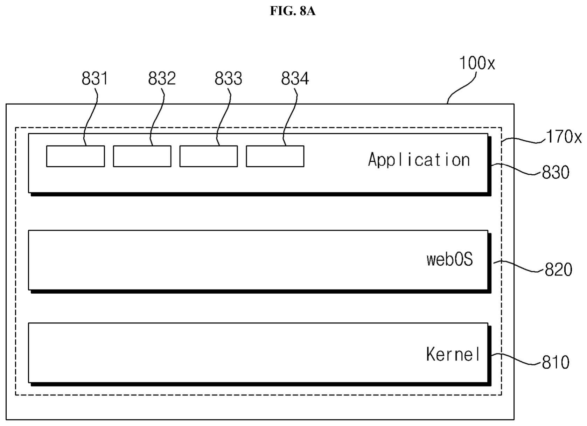

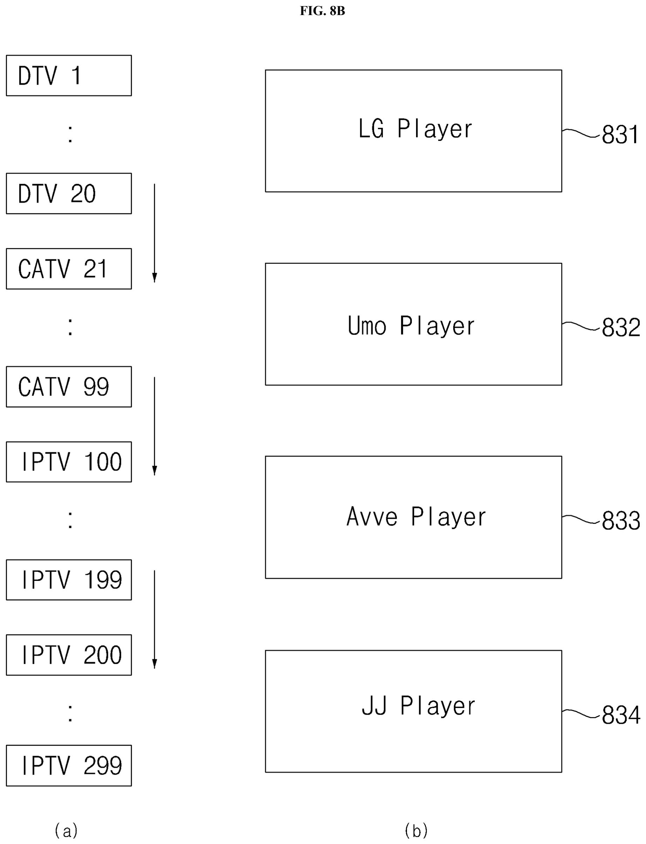

FIGS. 8A and 8B are diagrams referred to in the description of an operation of an image display apparatus related to the present disclosure.

Referring to the figures, a signal processing device 170x in an image display apparatus 100x related to the present disclosure can be configured to display a broadcast image corresponding to a broadcast channel when the broadcast channel item 723 of FIG. 7 is executed.

For example, the signal processing device 170x in the image display apparatus 100x related to the present disclosure can be configured to execute the kernel 810, the operating system 820, and the application layer 830 in order to display the broadcast image.

As illustrated in FIG. 8B, the broadcast channel can include terrestrial broadcast channels DTV1 to DTV20, cable broadcast channels CATV21 to CATV99, and Internet protocol (IP) broadcast channels IPTV100 to IPTV299.

Meanwhile, the signal processing device 170x in the image display apparatus 100x related to the present disclosure can be configured to execute a terrestrial broadcast player 831 in order to display broadcast images of the terrestrial broadcast channels DTV1 to DTV20.

Meanwhile, the signal processing device 170x in the image display apparatus 100x related to the present disclosure can be configured to execute a cable broadcast player 832 in order to display broadcast images of the cable broadcast channels CATV21 to CATV99.

Meanwhile, the signal processing device 170x in the image display apparatus 100x related to the present disclosure can be configured to execute a first IP broadcast player 833 in order to display broadcast images of some IPTV100 to IPTV199 of the IP broadcast channels IPTV100 to IPTV299.

Meanwhile, the signal processing device 170x in the image display apparatus 100x related to the present disclosure can be configured to execute a second IP broadcast player 834 in order to display broadcast images of other some IPTV200 to IPTV299 of the IP broadcast channels IPTV100 to IPTV299.

Meanwhile, the signal processing device 170x in the image display apparatus 100x related to the present disclosure can be configured to execute a plurality of broadcast players 831, 832, 833, and 834 in the application layer 830.

For example, when the signal processing device 170x in the video display device 100x related to the present disclosure switches to the CATV21, which is the cable broadcast channel, according to a channel switching input while executing the terrestrial broadcast player 831 for displaying the broadcast image of the DTV-20, which is the terrestrial broadcast channel, the signal processing device 170x can be configured to execute the cable broadcast player 832, which is a separate application, in the application layer 830, and display a broadcast image corresponding to the CATV 21 based on the execution of the cable broadcast player 832.

As described above, there is a disadvantage in that it takes a considerable amount of time for the terrestrial broadcast player to switch from the terrestrial broadcast player 831 to the cable broadcast player 832. Accordingly, there is a disadvantage in that the broadcast image switched at the time of channel switching can not be displayed seamlessly.

As another example, when the signal processing device 170x in the video display device 100x related to the present disclosure switches to the IPTV100, which is the IP broadcast channel, according to a channel switching input while executing the cable broadcast player 832 in order to display the broadcast image of the CATV99 which is the cable broadcast channel, the signal processing device 170x can be configured to execute a separate first IP broadcast player 833 within the application layer 830 and display the broadcast image corresponding to the IPTV100 based on the execution of the first IP broadcast player 833.

As described above, there is a disadvantage in that it takes a considerable amount of time to switch from the cable broadcast player 832 to the first IP broadcast player 833. Accordingly, there is a disadvantage in that the broadcast image switched at the time of channel switching can not be displayed seamlessly.

As yet another example, when the signal processing device 170x in the image display apparatus 100x related to the present disclosure switches to the IPTV200 which is the IP broadcast channel, according to a channel switching input while executing the first IP broadcast player 833 in order to display the broadcast image of the IPTV199 which is the IP broadcast channel, the signal processing device 170x can be configured to execute a separate second IP broadcast player 834 within the application layer 830 and display the broadcast image corresponding to the IPTV200 based on the execution of the second IP broadcast player 834.

As described above, there is a disadvantage in that it takes a considerable amount of time to switch from the first IP broadcast player 833 to the second IP broadcast player 834. Accordingly, there is a disadvantage in that the broadcast image switched at the time of channel switching can not be displayed seamlessly.

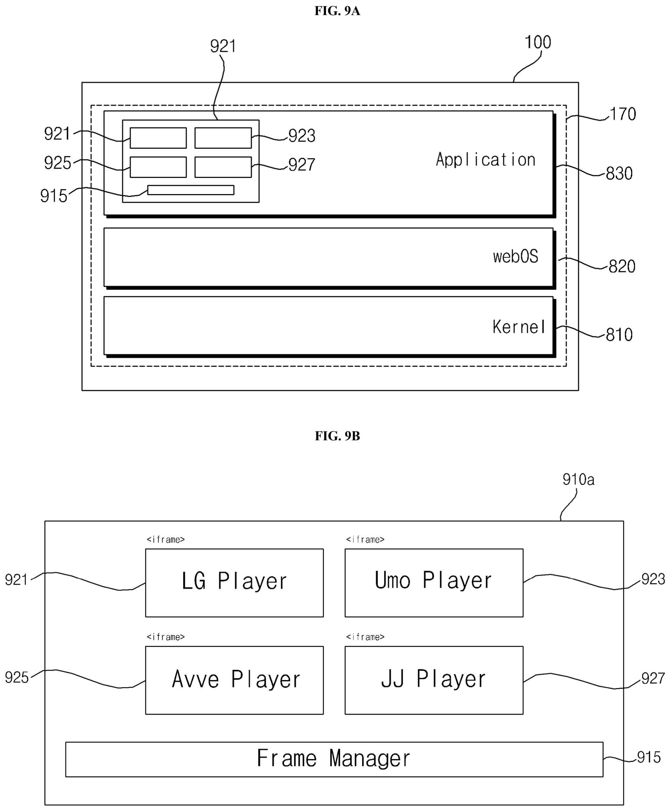

Accordingly, the present disclosure proposes a method in which a plurality of broadcast players 831, 832, 833, and 834, each of which is executed in a separate application in the application layer 830, is executed in one application, and seamless image display is enabled at the time of content switching or channel switching. This is described with reference to FIG. 9A and below.

FIG. 9A is a diagram referred to in an example of the description of the operation of the image display apparatus according to an embodiment of the present disclosure.

Referring to the figure, the image display apparatus 100 according to an embodiment of the present disclosure includes the display 180, a content receiver 105 configured to receive a plurality of contents, and a signal processing device 170 configured to output an image signal to the display 180.

Meanwhile, the signal processing device 170 according to an embodiment of the present disclosure is configured to execute an application 910 for reproducing a plurality of contents, and controls to change a content reproduction player executed in the application 910 in response to switching of the content reproduction player is required upon switching input between the plurality of contents. Accordingly, it is possible to perform seamless switching in response to switching between the contents. In particular, the seamless switching can be performed in response to switching between heterogeneous contents.

Meanwhile, the signal processing device 170 according to an embodiment of the present disclosure is configured to deactivate an image window of the content reproduction player being reproduced and activate an image window of the content reproduction player being switched when the content reproduction player executed in the application 910 is changed. Accordingly, it is possible to perform seamless switching in response to switching between the contents. In particular, the seamless switching can be performed in response to switching between heterogeneous contents.

For example, the signal processing device 170 according to an embodiment of the present disclosure can be configured to execute the operating system 820, execute the application layer 830 on the operating system 820, and execute the content application 910 including a plurality of content reproduction players 921, 923, 925, and 927 in the application layer 830.

As another example, the signal processing device 170 according to an embodiment of the present disclosure can be configured to execute the kernel 810, the web-based operating system 820 on the kernel 810, execute the application layer 830 on the operating system 820, and execute the web-based content application 910 including the plurality of content reproduction players 921, 923, 925, and 927 in the application layer 830.

Meanwhile, when the live content item 710 of FIG. 7A is selected, the signal processing device 170 according to an embodiment of the present disclosure can be configured to execute the content application 910.

Meanwhile, the signal processing device 170 can control a first content reproduction player 921 corresponding to a first content to be executed in the application 910, and control a second content reproduction player 925 to be executed in the application 910 when execution of a second content reproduction player 925 corresponding to a second content is required.

Meanwhile, the signal processing device 170 can control the second content reproduction player 925 to be executed while the first content reproduction player 921 is being executed in the application 910 in response to switching input between a plurality of contents.

That is, the signal processing device 170 can control the plurality of content reproduction players 921 and 925 to be temporarily superimposed and executed in response to the switching input between the contents. Accordingly, it is possible to perform seamless switching in response to switching between the contents.

Meanwhile, the signal processing device 170 can control the first content reproduction player 921 and the second content reproduction player 925 to be simultaneously executed, and then the execution of the first content reproduction player 921 to be terminated, and the second content reproduction player 925 to be executed, according to the switching input between the plurality of contents.

That is, the signal processing device 170 can control the execution of the first content reproduction player 921 that has been executed earlier to be terminated, and only the second content reproduction player 925 that is newly executed when a driving time of the content reproduction players that are temporarily superimposed elapsed for a predetermined time. Accordingly, it is possible to perform seamless switching in response to switching between the contents.

FIGS. 9B to 12D are diagrams referred to in the description of FIG. 9A.

FIG. 9B illustrates an example of the application of FIG. 9A.

Referring to the figure, the signal processing device 170 can be configured to execute a plurality of content reproduction players 921, 923, 925, and 927 in an application 910a, and execute a frame manager 915 to operate based on a web and executes a corresponding content reproduction player for each content based on information of a plurality of contents.

Meanwhile, the frame manager 915 can control the plurality of content playback players 921, 923, 925, and 927 to be continuously or simultaneously executed in the application 910 based on a web-based inline frame. Accordingly, it is possible to perform seamless switching in response to switching between the contents.

Meanwhile, the frame manager 915 can receive a content switching request and control, according to the content switching request, to change the content reproduction player executed in the application 910 in response to switching of the content reproduction player is required. Accordingly, it is possible to perform seamless switching in response to switching between the contents.

Meanwhile, the frame manager 915 can receive the content switching request and control, according to the content switching request, at least two content reproduction players to be executed during a predetermined period in response to switching of the content reproduction player is required. Accordingly, it is possible to perform seamless switching in response to switching between the contents.

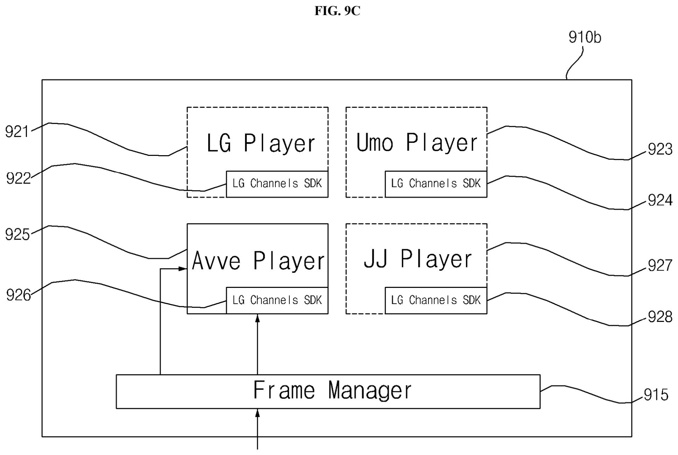

FIG. 9C illustrates another example of the application of FIG. 9A.

Referring to the figure, the signal processing device 170 can be configured to execute the plurality of content reproduction players 921, 923, 925, and 927 in an application 910b, and execute a frame manager 915 to operate based on a web, and executes a corresponding content reproduction player for each content based on information on a plurality of contents.

Meanwhile, the plurality of content reproduction players 921, 923, 925, and 927 can include software development kits (SDK) 922, 924, 926, and 928, respectively.

For example, the frame manager 915 can be configured to control update, restart, or re-execution of at least one of the plurality of content playback players 921, 923, 925, and 927 by using the software development kits (SDKs) 922, 924, 926, and 928. Accordingly, updating and the like of a plurality of content reproduction players can be efficiently performed.

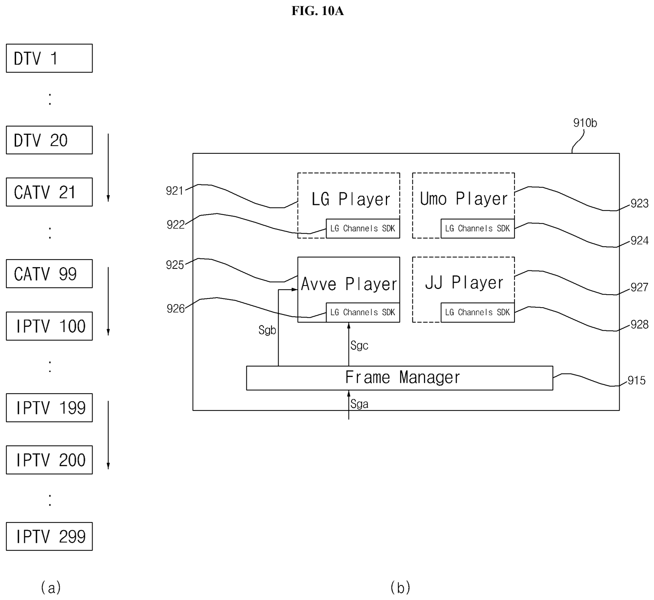

Meanwhile, the plurality of contents can include a broadcast channel. This will be described with reference to FIGS. 10A to 10D.

FIG. 10A is a diagram referred to in a description of channel switching when a plurality of contents include a broadcast channel.

Referring to the figure, the broadcast channel can include terrestrial broadcast channels DTV1 to DTV20, cable broadcast channels CATV21 to CATV99, and Internet protocol (IP) broadcast channels IPTV100 to IPTV299.

Meanwhile, the signal processing device 170 in the image display apparatus 100 according to the embodiment of the present disclosure can be configured to execute the broadcast channel application 910b when the broadcast channel item 723 corresponding to the broadcast channel application of FIG. 7 is selected.

Meanwhile, the signal processing device 170 in the image display apparatus 100 according to the embodiment of the present disclosure can be configured to execute a terrestrial broadcast player 921 in order to display broadcast images of the terrestrial broadcast channels DTV1 to DTV20.

Meanwhile, the signal processing device 170 in the image display apparatus 100 according to the embodiment of the present disclosure can be configured to execute a cable broadcast player 923 in the broadcast channel application 910b in order to display broadcast images of the cable broadcast channels CATV21 to CATV99.

Meanwhile, the signal processing device 170 in the image display apparatus 100 according to the embodiment of the present disclosure can be configured to execute a first IP broadcast player 925 in the broadcast channel application 910b in order to display broadcast images of some IPTV100 to IPTV199 of the IP broadcast channels IPTV100 to IPTV299.

Meanwhile, the signal processing device 170 in the image display apparatus 100 according to the embodiment of the present disclosure can be configured to execute a second IP broadcast player 927 in the broadcast channel application 910b in order to display broadcast images of other some IPTV200 to IPTV299 of the IP broadcast channels IPTV100 to IPTV299.

That is, the signal processing device 170x in the image display apparatus 100x according to the embodiment of the present disclosure can be configured to execute a plurality of broadcast players 921, 923, 925, and 927 in the broadcast channel application 910b.

For example, when the signal processing device 170 in the image display apparatus 100 according to the embodiment of the present disclosure switches to the CATV21, which is the cable broadcast channel, according to a channel switching input while executing the terrestrial broadcast player 921 in order to display the broadcast image of the DTV-20, which is the terrestrial broadcast channel, the signal processing device 170 can be configured to execute the cable broadcast player 923 in the broadcast channel application 910, and display a broadcast image corresponding to the CATV 21 based on the execution of the cable broadcast player 923.

In particular, the signal processing device 170 in the image display apparatus 100 according to the embodiment of the present disclosure can be configured to control the terrestrial broadcast player 921 and the cable broadcast player 923 in the broadcast channel application 910b to be temporarily superimposed upon broadcast channel switching.

As described above, when the broadcast player switches from the terrestrial broadcast player 921 to the cable broadcast player 923, the broadcast player is executed in the same broadcast channel application 910b, and the terrestrial broadcast player 921 and the cable broadcast player 923 are temporarily superimposed and executed, so that the switching time is significantly reduced, and eventually, the broadcast image switched at the time of channel switching can be seamlessly displayed.

As another example, when the signal processing device 170 in the image display apparatus 100 according to the embodiment of the present disclosure switches to the IPTV100, which is the IP broadcast channel, according to a channel switching input while executing the cable broadcast player 932 in order to display the broadcast image of the CATV99 which is the cable broadcast channel, the signal processing device 170 can be configured to execute the first IP broadcast player 925 within the broadcast channel application 910 and display the broadcast image corresponding to the IPTV100 based on the execution of the first IP broadcast player 925.

In particular, the signal processing device 170 in the image display apparatus 100 according to the embodiment of the present disclosure can be configured to control the cable broadcast player 923 and the first IP broadcast player 925 in the broadcast channel application 910b to be temporarily superimposed upon broadcast channel switching.

As described above, when the broadcast player switches from the cable broadcast player 923 to the first IP broadcast player 925, the broadcast player is executed in the same broadcast channel application 910b, and the cable broadcast player 923 and the first IP broadcast player 925 temporarily superimposed and executed, so that the switching time is significantly reduced, and eventually, the broadcast image switched at the time of channel switching can be seamlessly displayed.

As yet another example, when the signal processing device 170 in the image display apparatus 100 according to the embodiment of the present disclosure switches to the IPTV200 which is the IP broadcast channel, according to a channel switching input while executing the first IP broadcast player 925 in order to display the broadcast image of the IPTV199 which is the IP broadcast channel, the signal processing device 170 can be configured to execute a second IP broadcast player 927 in the broadcast channel application 910b, and display the broadcast image corresponding to the IPTV200 based on the execution of the second IP broadcast player 927.

In particular, the signal processing device 170 in the image display apparatus 100 according to the embodiment of the present disclosure can be configured to control the first IP broadcast player 925 and the second IP broadcast player 927 in the broadcast channel application 910b to be temporarily superimposed upon broadcast channel switching.

As described above, when the broadcast player switches from the first IP broadcast player 925 to the second IP broadcast player 927, the broadcast player is executed in the same broadcast channel application 910b, and the first IP broadcast player 925 and the second IP broadcast player 927 are temporarily superimposed and executed, so that the switching time is significantly reduced, and eventually, the broadcast image switched at the time of channel switching can be seamlessly displayed.

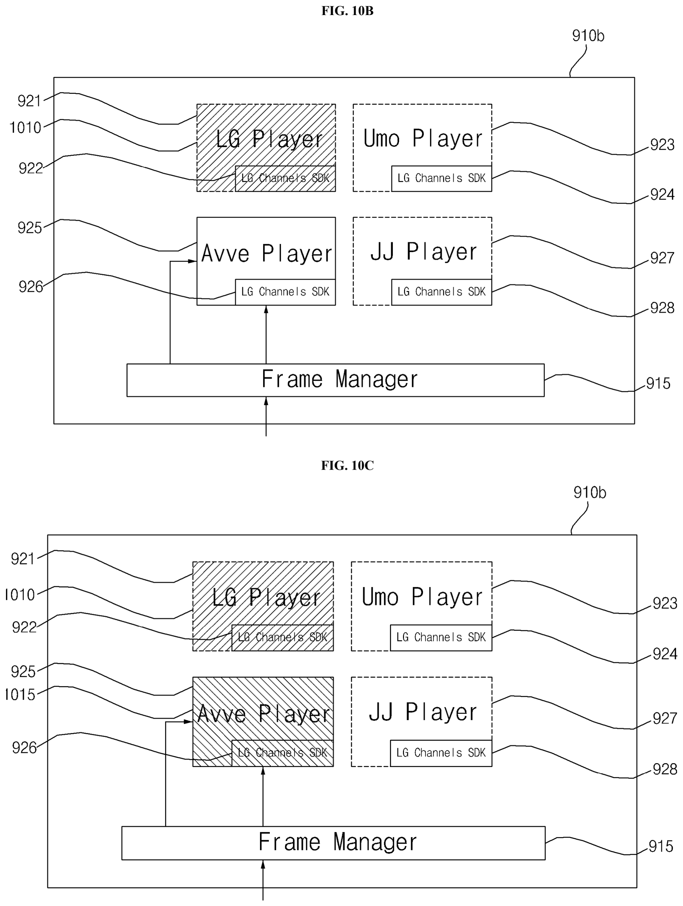

FIG. 10B illustrates activation 1010 of the terrestrial broadcast player 921 in the broadcast channel application 910b.

Referring to the figure, when the broadcast channel item 723 in the home screen 800 is selected or a broadcast channel display input is received from the remote controller 200, the signal processing device 170 can be configured to execute a broadcast channel application 910b for reproducing a plurality of broadcast channels.

In this case, the signal processing device 170 can activate 1010 the terrestrial broadcast player 921 among the plurality of broadcast players 831, 832, 833, and 834 in the broadcast channel application 910b.

That is, the signal processing device 170 can be configured to display a broadcast image of any one channel of the terrestrial broadcast channels DTV1 to DTV20 in response to the activation of the terrestrial broadcast player 921 in the broadcast channel application 910b.

Meanwhile, when there is a switching input between a plurality of broadcast channels from the remote controller 200 or the like and it is necessary to switch the content reproduction player, the signal processing device 170 can change the content reproduction player executed in the broadcast channel application 910b.

For example, the signal processing device 170 can control the first content reproduction player 921 corresponding to the first broadcast channel to be executed in the broadcast channel application 910b, and control the first IP broadcast player 925 to be executed in the first application 910 when execution of the second content reproduction player 925 corresponding to the second broadcast channel is required. Accordingly, it is possible to perform seamless switching in response to switching between the contents.

Meanwhile, the signal processing device 170 can control the second content reproduction player 925 to be executed while the first content reproduction player 921 is being executed in the broadcast channel application 910b in response to a switching input between a plurality of broadcast channels. Accordingly, it is possible to perform seamless switching in response to switching between the contents.

FIG. 10C illustrates the activation 1010 of the terrestrial broadcast player 921 and activation 1015 of the first IP broadcast player 925 in the broadcast channel application 910b.

For example, the signal processing device 170 can be configured to display a broadcast image of DTV20 which is an example of the terrestrial broadcast channel by activating the terrestrial broadcast player 921 in the broadcast channel application 910b.

Meanwhile, when there is a channel switching input to IPTV100, which is an example of the IP broadcast channel during displaying of the broadcast image of DTV20, the signal processing device 170 can activate 1015 the first IP broadcast player 925 in a state of maintaining the activation 1010 of the terrestrial broadcast player 921.

Accordingly, the signal processing device 170 can quickly display the broadcast image of the IPTV100.. Accordingly, it is possible to perform seamless switching in response to switching between broadcast channels. In particular, the seamless switching can be performed in response to switching between broadcast channels in which reproduction players are different.

Meanwhile, the frame manager 170 can be configured to receive a channel switching request, and control, according to the channel switching request, at least two broadcast reproduction players to be executed during a predetermined period in response to switching of the broadcast reproduction player is required. Accordingly, the seamless switching can be performed in response to switching between broadcasts.

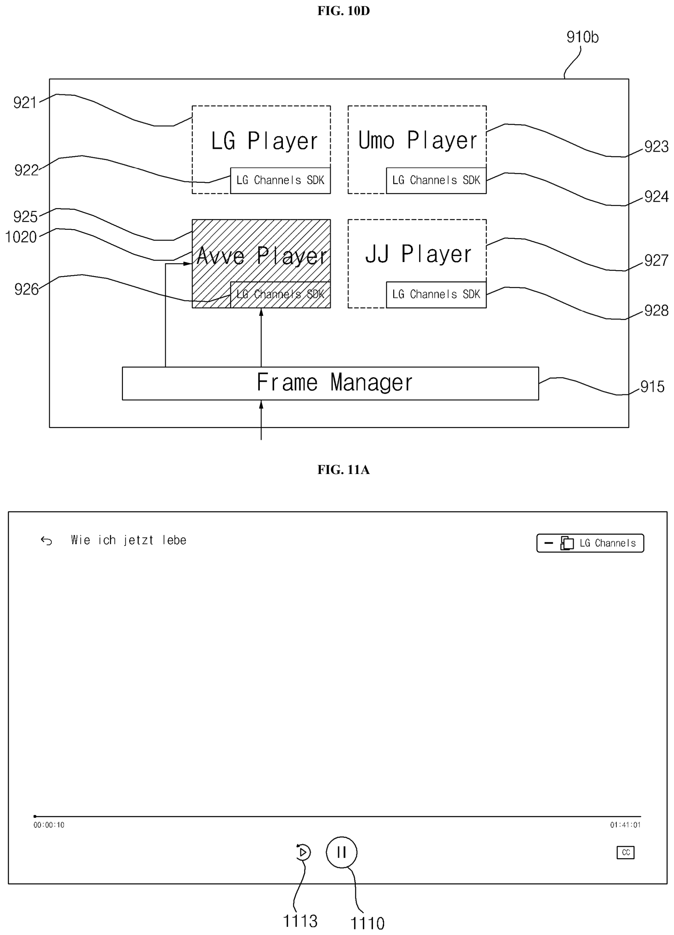

FIG. 10D illustrates the activation 1015 of the first IP broadcast player 925 in the broadcast channel application 910b.

Referring to the figure, the signal processing device 170 can control the first content reproduction player 921 and the second content reproduction player 925 to be simultaneously executed, and then the execution of the first content reproduction player 921 to be terminated, and the second content reproduction player 925 to be executed, according to the switching input between the plurality of broadcast channels.

For example, the signal processing device 170 can control the terrestrial broadcast player 921 and the first IP broadcast player 925 to be simultaneously executed, and then the execution of the terrestrial broadcast player 921 to be terminated, and the first IP broadcast player 925 to be executed, according to the switching input between the plurality of broadcast channels.

Accordingly, signal processing resources in the image display apparatus 100 can be efficiently operated.

Meanwhile, the meaning of "activating" described in the description of FIGS. 10B to 10D can mean selecting a window including a rendered image in a state in which image rendering according to an operation of a broadcast player is performed.

For example, the signal processing device 170 can execute all of the plurality of broadcast players 831, 832, 833, and 834 in the broadcast channel application 910b to select a rendered image of the activated broadcast player in a state in which rendered images are respectively generated, and control to display any one of windows including the rendered image on the display 180.

As another example, the signal processing device 170 can be configured to generate a rendering image only for an activated broadcast player, and generate a window including a rendered image, in a state of executing all of the plurality of broadcast players 831, 832, 833, and 834 in the broadcast channel application 910b.

In addition, when there are a plurality of rendered images, the signal processing device 170 can be configured to select any one of the rendered images and display the selected one on the display 180.

Similarly, the meaning of "change of a content reproduction player" or "change of a broadcast reproduction player" described in the description of FIGS. 9A to 10D can mean selecting a window including a rendered image in a state in which image rendering according to an operation of a broadcast player is performed.

For example, the signal processing device 170 can execute all of the plurality of broadcast players 831, 832, 833, and 834 in the broadcast channel application 910b to select a window including a rendered image of the changed broadcast player in a state in which rendered images are respectively generated, and control to display any one of windows including the rendered image in the selected window on the display 180.

As another example, when the broadcast reproduction player is changed in a state of executing all of the plurality of broadcast players 831, 832, 833, and 834 in the broadcast channel application 910b, the signal processing device 170 can be configured to generate a window in which only the changed broadcast player includes the rendering image, and display the generated window on the display 180.

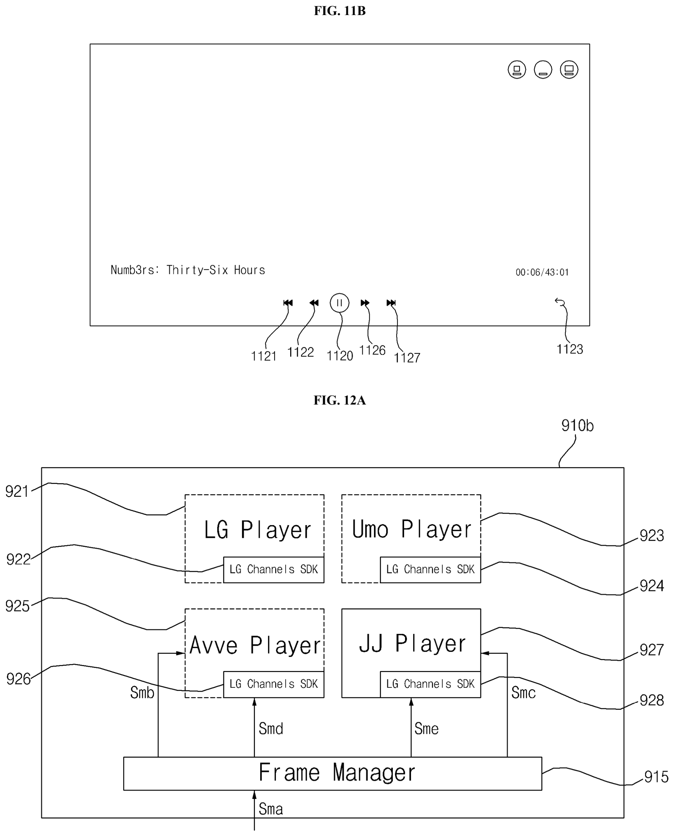

Meanwhile, the signal processing device 170 can be configured to change an object related to reproduction of a content in response to the content reproduction player being switched. This will be described with reference to FIGS. 11A and 11B.

FIG. 11A illustrates an example of a reproduction related object of the first content reproduction player.

Referring to the figure, when the first content reproduction player is activated, the signal processing apparatus 170 can be configured to display the reproduction related object of the first content reproduction player while displaying a content image corresponding to the first content reproduction player.

In the figure, a pause object 1110 and a reproduction object 1113 are illustrated as reproduction related objects of the first content reproduction player.

FIG. 11B illustrates an example of a reproduction related object of the second content reproduction player.

Referring to the figure, when the second content reproduction player is activated, the signal processing apparatus 170 can be configured to display the reproduction related object of the second content reproduction player while displaying a content image corresponding to the second content reproduction player.

In the figure, a pause object 1120, a backward moving object 1112, a moving-to-head object 1121, a forward moving object 1125, and a moving-to-end moving object 1127 are illustrated as reproduction related objects of the second content reproduction player.

That is, the signal processing device 170 can be configured to change an object related to reproduction of a content in response to the content reproduction player being switched. Accordingly, an object suitable for reproduction of a content can be provided.

FIGS. 12A to 12D are diagrams illustrating detailed operations of the broadcast channel application 910b.

FIG. 12A illustrates that the broadcast channel application 910b includes or executes the plurality of content reproduction players 921, 923, 925, and 927 and the frame manager 915.

When the broadcast channel application 910b is executed, the signal processing device 170 can execute at least some of the plurality of content reproduction players 921, 923, 925, and 927 by utilizing an iFrame technique of inserting another web page into a web page.

Meanwhile, the signal processing device 170 can be configured to deactivate an image window of the content reproduction player being reproduced and activate an image window of the content reproduction player being switched when the content reproduction player executed in the broadcast channel application 910b is changed.

For example, when the frame manager 915 receives a channel switching input Sma from the IPTV100, which is an example of an IP broadcast channel, to the IPTV200, which is another example of the IP broadcast channel, the frame manager 916 can transmit a window deactivation signal Smb to the first IP broadcast player 925 corresponding to the IPTV100 and transmit a window activation signal Smc to the second IP broadcast player 927 corresponding to the IPTV200.

Accordingly, the signal processing device 170 does not select the broadcast image window corresponding to the IPTV100 based on the window deactivation signal Smb of the first IP broadcast player 925, and can select the broadcast image window corresponding to the IP TV200 based on the window activation signal Smc of the second IP broadcast player 927.

In addition, the frame manager 915 can transmit a reproduction end request signal Smd of an IPTV100 channel to the first IP broadcast player 925 corresponding to the IPTV100, and transmit the reproduction request signal Smc of an IPTV200 channel to the second IP broadcast player 927 corresponding to the IPTV200.

When the reproduction end request signal Smd is received, the first IP broadcast player 925 can stop rendering generation of a broadcast image of the IPTV100 channel.

Meanwhile, when the reproduction request signal Smc is received, the second IP broadcast player 927 can continue to perform rendering of the broadcast image of the IPTV200 channel.

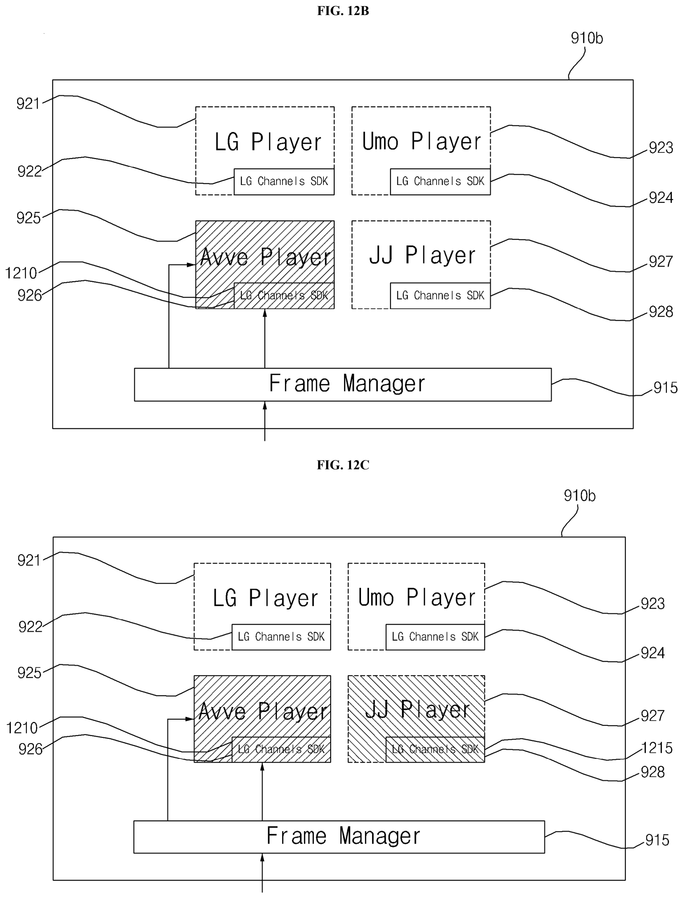

FIG. 12B illustrates that the first IP broadcast player 925 corresponding to the IPTV100 is activated.

Referring to the figure, the signal processing device 170 can be configured to select a broadcast image window corresponding to the IPTV100 based on the window activation signal of the first IP broadcast player 925, and display the broadcast image corresponding to the IPTV100.

FIG. 12C illustrates that the first IP broadcast player 925 corresponding to the IPTV100 and the second IP broadcast player 927 corresponding to the IPTV200 are activated.

Referring to the figure, in a state in which the first IP broadcast player 925 is activated, the second IP broadcast player 927 can receive the window activation signal Smc.

Accordingly, the signal processing device 170 can temporarily the first IP broadcast player 925 corresponding to the IPTV100 and the second IP broadcast player 927 corresponding to the IPTV200 to be activated.

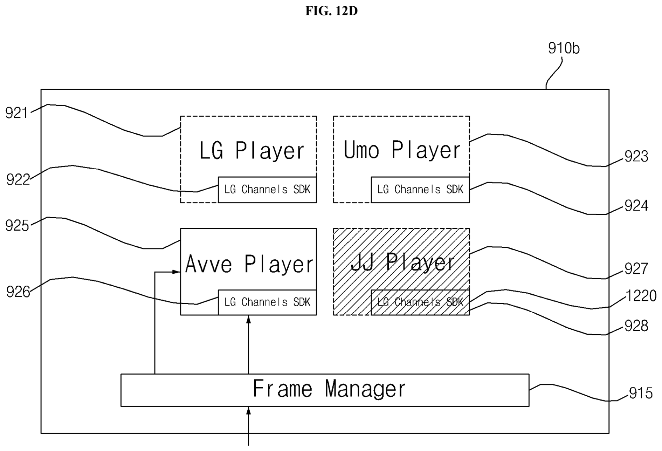

FIG. 12D illustrates that the second IP broadcast player 927 corresponding to the IPTV200 is activated.

Referring to the figure, in a state in which the first IP broadcast player 925 and the second IP broadcast player 927 are activated, the first IP broadcast player 925 can receive the window deactivation signal Smb.

Accordingly, the signal processing device 170 can select the second IP broadcast player 927 corresponding to the IPTV200 and control the corresponding broadcast image to be displayed. Accordingly, it is possible to perform seamless switching in response to switching between contents.

According to FIGS. 12A to 12D, when the broadcast channel application 910b is executed, the signal processing device 170 can execute a plurality of content reproduction players 921, 923, 925, and 927 in the broadcast channel application 910b, stop outputting a first image signal based on the first content reproduction player 921 being executed when a switching input between a plurality of contents, and output a second image signal based on a second content reproduction player 925 being executed to the display 180. Accordingly, it is possible to perform seamless switching in response to switching between contents.

Meanwhile, when some content reproduction players among the plurality of content players 921, 923, 925, and 927 in the broadcast channel application 910b are not executed during a set period, the signal processing device 170 can execute the remaining content players other than some content reproduction players when the broadcast channel application 910b is executed.

For example, when the second IP broadcast player 927 is not executed during the set period, the signal processing device 170 can be configured to execute only the terrestrial broadcast player 921, the cable broadcast player 923, and the first IP broadcast player 925, and not to execute the second IP broadcast player 927 when the broadcast channel application 910b is executed.

Meanwhile, the signal processing device 170 can set a priority based on at least one of a driving time, the number of channels, a recent usage history, a processor usage rate, or a memory usage rate of the plurality of content reproduction players 921, 923, 925, and 927 in the broadcast channel application 910b.

For example, when the driving time, the number of channels, and the recent usage history of the first IP broadcast player 925 are higher than those of other players, the signal processing device 170 can control the first IP broadcast players 925 to be executed first among the plurality of content reproduction players 921, 923, 925, and 927. Accordingly, resources of the signal processing device can be efficiently managed.

As another example, the signal processing device 170 can control the terrestrial broadcast player 921 to be executed first when the processor usage rate and the memory usage rate of the terrestrial broadcast player 921 are the lowest among the plurality of content reproduction players 921, 923, 925, and 927. Accordingly, resources of the processor or the memory can be efficiently managed.

For example, the signal processing device 170 can control the cable broadcast player 923, the terrestrial broadcast player 921, the first IP broadcast player 925, and the second IP broadcast player 927 to be executed in this order based on the set priority.

Meanwhile, the signal processing device 170 can selectively cause some of the plurality of content reproduction players 921, 923, 925, and 927 to be executed when the broadcast channel application 910b is executed based on the set priority. Accordingly, resources of the signal processing device can be efficiently managed.

For example, the signal processing device 170 can control only the terrestrial broadcast player 921, the cable broadcast player 923, and the first IP broadcast player 925, and the second IP broadcast player 927 to be executed, and the second IP broadcast player 927 not to be executed based on the set priority. Accordingly, resources of the signal processing device can be efficiently managed.

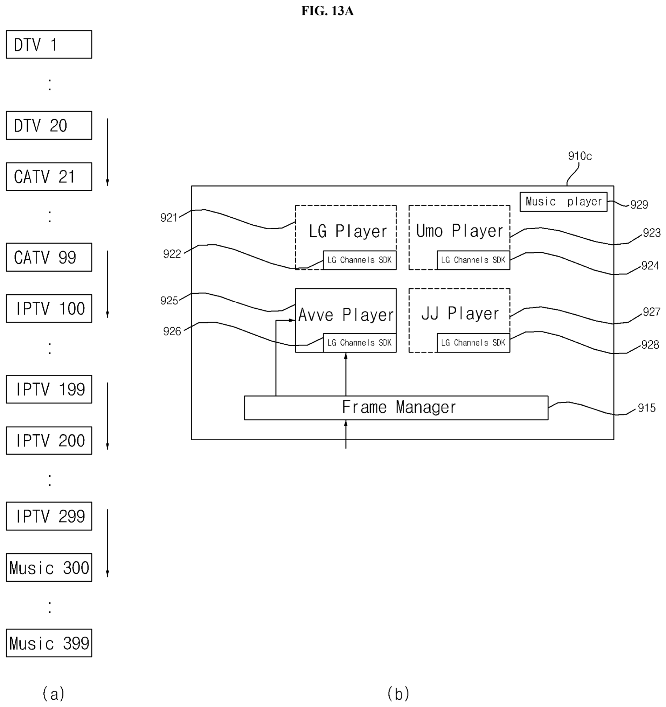

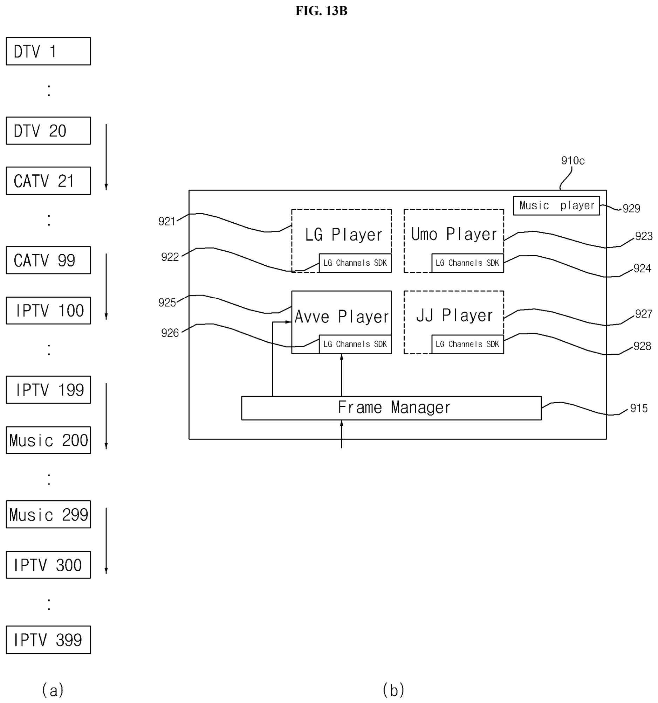

Meanwhile, the plurality of contents can include an image content and an audio content. This will be described with reference to FIGS. 13A and 13B.

FIGS. 13A to 14B are diagrams referred to in various examples of the description of the operation of the image display apparatus according to an embodiment of the present disclosure.

FIG. 13A illustrates an example of a content list.

Referring to the figure, when the live content item 710 in the home screen 800 of FIG. 7 is selected, the signal processing device 170 can control a content corresponding to any one of content lists illustrated in FIG. 13A(a) to be output.

Meanwhile, the content list of FIG. 13A(a) can include terrestrial broadcast channels DTV1 to DTV20, cable broadcast channels CATV21 to CATV99, Internet protocol (IP) broadcast channels IPTV100 to IPTV299, and audio channels Music300 to Music399.

The audio channels Music300 to Music399 can include a radio channel, a live streaming channel, a podcast channel, or the like.

Meanwhile, when the live content item 710 in the home screen 800 of FIG. 7 is selected, the signal processing device 170 can execute a content reproduction application 910c for reproducing an image content and an audio content.

In this case, the content reproduction application 910c can include a terrestrial broadcast player 921 corresponding to the terrestrial broadcast channels DTV1 to DTV20, a cable broadcast player 923 corresponding to the cable broadcast channels CATV21 to CATV99, a first IP broadcast player 925 corresponding to some IPTV100 to IP TV199 of the IP broadcast channels IPTV100 to IPTV299, a second IP broadcast player 927 corresponding to other some IPTV200 to IPTV299 of the IP broadcast channels IPTV 100 to IPTV299, and a music player 929 corresponding to the audio channels Music300 to Music399.

Meanwhile, the content reproduction application 910c can further include a frame manager 915.

Meanwhile, the signal processing device 170 can select a content reproduction player corresponding to the channel in the content list of FIG. 13A(a) and control an image signal or an audio signal corresponding to the content to be output.

Meanwhile, if it is necessary to switch the content reproduction player when there is a switching input between the image content and the audio content, the signal processing device 170 can change the content reproduction player executed in the content reproduction application 910c. Accordingly, it is possible to perform seamless switching in response to switching between heterogeneous contents.

Meanwhile, the signal processing device 170 can control the first content reproduction player 921 corresponding to the image content to be executed in the content reproduction application 910c, and control the second content reproduction player 929 to be executed during the execution of the first content reproduction player 921 when execution of the second content reproduction player 929 corresponding to the audio content is required in response to the switching input between the image content and the audio content. Accordingly, it is possible to perform seamless switching in response to switching between contents.

FIG. 13B illustrates another example of the content list.

Referring to the figure, when the live content item 710 in the home screen 800 of FIG. 7 is selected, the signal processing device 170 can control a content corresponding to any one of content lists illustrated in FIG. 13B(a) to be output.

Meanwhile, the content list of FIG. 13A(a) can include terrestrial broadcast channels DTV1 to DTV20, cable broadcast channels CATV21 to CATV99, Internet protocol (IP) broadcast channels IPTV100 to IPTV199, audio channels Music200 to Music299, and IP broadcast channels IPTV300 to IPTV399.

For example, when a driving time, a recent usage history, and a usage frequency of the audio channels Music200 to Music299 are higher than those of the IP broadcast channels IPTV300 to IPTV399 based on a usage history of the user and the like, the signal processing device 170 can set a priority to be higher than that of the IP broadcast channel IPTV300 or IPTV399 when configuring the channel list.

Accordingly, as illustrated in the figure, the audio channels Music200 to Music299 can be placed to have a higher priority than the IP broadcast channels IPTV300 to IPTV399.

Meanwhile, the signal processing apparatus 170 can be configured to change a channel list based on an input signal or the like.

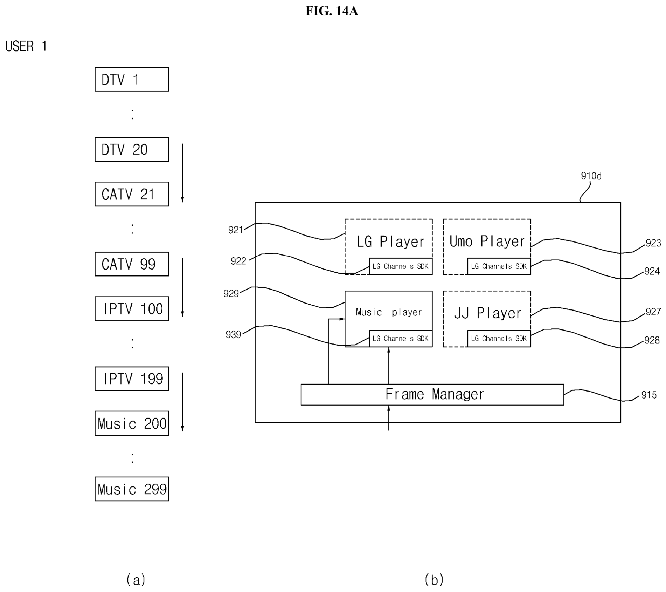

FIG. 14A illustrates an example of a first content list for a first user.

Referring to the figure, when a first user is selected in the user log-in item 702 in the home screen 800 of FIG. 7, and the live content item 710 is selected, the signal processing device 170 can control a content corresponding to any one of first content lists illustrated in FIG. 14A(a) to be output.

Meanwhile, the first content list for the first user of FIG. 14A(a) can include terrestrial broadcast channels DTV1 to DTV20, cable broadcast channels CATV21 to CATV99, Internet protocol (IP) broadcast channels IPTV100 to IPTV199, and audio channels Music200 to Music299.

The audio channels Music300 to Music399 can include a radio channel, a live streaming channel, a podcast channel, or the like.

Meanwhile, when the live content item 710 in the home screen 800 of FIG. 7 is selected, the signal processing device 170 can be configured to execute a content reproduction application 910d for reproducing an image content and an audio content for the first user.

In this case, the content reproduction application 910c can include a terrestrial broadcast player 921 corresponding to the terrestrial broadcast channels DTV1 to DTV20, a cable broadcast player 923 corresponding to the cable broadcast channels CATV21 to CATV99, an IP broadcast player 927 corresponding to IPTV100 to IPTV299, and a music player 929 corresponding to the audio channels Music300 to Music399.

Meanwhile, the music player 929 can include a software development kit (SDK) 939.

Meanwhile, the content reproduction application 910d can further include a frame manager 915.

Meanwhile, the signal processing device 170 can select a content reproduction player corresponding to the channel in the content list of FIG. 14A(a) and control an image signal or an audio signal corresponding to the content to be output.

Meanwhile, if it is necessary to switch the content reproduction player when there is a switching input between the image content and the audio content, the signal processing device 170 can change the content reproduction player executed in the content reproduction application 910d. Accordingly, it is possible to perform seamless switching in response to switching between heterogeneous contents.

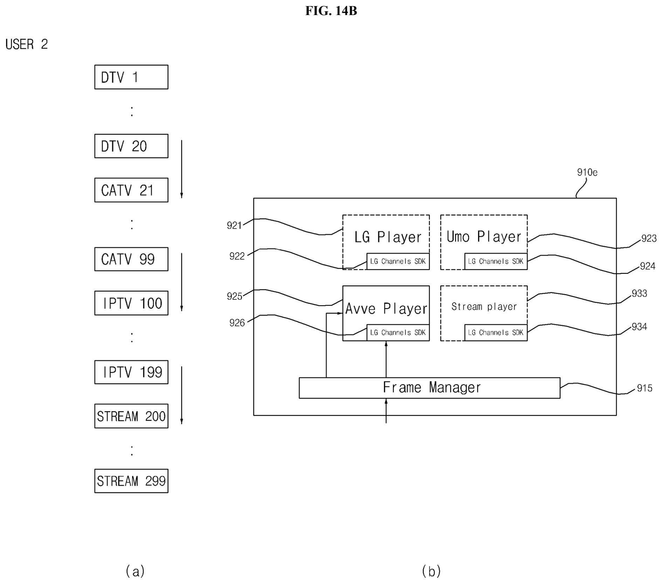

FIG. 14B illustrates an example of a second content list for a second user.

Referring to the figure, when a second user is selected in the user log-in item 702 in the home screen 800 of FIG. 7, and the live content item 710 is selected, the signal processing device 170 can control a content corresponding to any one of second content lists illustrated in FIG. 14B(a) to be output.

Meanwhile, the second content list for the second user of FIG. 14B(a) can include terrestrial broadcast channels DTV1 to DTV20, cable broadcast channels CATV21 to CATV99, Internet protocol (IP) broadcast channels IPTV100 to IPTV199, and streaming channels STREAM200 to STREAM299.

The streaming channels STREAM200 to STREAM299 can include a radio streaming channel, an image streaming channel, or the like.

Meanwhile, when the live content item 710 in the home screen 800 of FIG. 7 is selected, the signal processing device 170 can be configured to execute a content reproduction application 910e for reproducing an image content and an audio content for the second user.

In this case, the content reproduction application 910c can include a terrestrial broadcast player 921 corresponding to the terrestrial broadcast channels DTV1 to DTV20, a cable broadcast player 923 corresponding to the cable broadcast channels CATV21 to CATV99, an IP broadcast player 925 corresponding to IPTV100 to IPTV299, and a streaming player 933 corresponding to the streaming channels STREAM200 to STREAM299.

Meanwhile, the streaming player 933 can include a software development kit (SDK) 934.

Meanwhile, the content reproduction application 910e can further include a frame manager 915.

Meanwhile, the signal processing device 170 can select a content reproduction player corresponding to the channel in the content list of FIG. 14B(a) and control an image signal or an audio signal corresponding to the content to be output.

Meanwhile, if it is necessary to switch the content reproduction player when there is a switching input between the image content and the audio content, the signal processing device 170 can change the content reproduction player executed in the content reproduction application 910e. Accordingly, it is possible to perform seamless switching in response to switching between heterogeneous contents.

Meanwhile, similarly to FIGS. 14A and 14B, according to the horizontal mode or the vertical mode of the image display apparatus 100 of FIG. 1, the signal processing device 170 can change the content reproduction player executed in the content reproduction application 910.

For example, when the image display apparatus 100 of FIG. 1 is in the horizontal mode, the signal processing device 170 can set the number of content reproduction players executed in the content reproduction application 910 to a first number. Accordingly, it is possible to perform seamless switching in response to switching between contents in the horizontal mode.

As another example, when the image display apparatus 100 of FIG. 1 is in the vertical mode, the signal processing device 170 can set the number of content reproduction players executed in the content reproduction application 910 to a second number. Accordingly, seamless switching in response to switching between contents in the vertical mode.

As yet another example, when the image display apparatus 100 of FIG. 1 is switched between the horizontal mode and the vertical mode, the signal processing device 170 can change the content reproduction player executed in the content reproduction application 910. Accordingly, when the image display apparatus 100 is switched between the horizontal mode and the vertical mode, a corresponding content can be seamlessly provided.

As described above, an image display apparatus according to an embodiment of the present disclosure includes a display; a content receiver configured to receive a plurality of contents; and a signal processing device configured to output an image signal to the display, and the signal processing device is configured to execute an application for reproducing the plurality of contents, in response to switching a content reproduction player being required upon a switching input between the plurality of contents, change a content reproduction player executed in the application, and in response to the content reproduction player (921,923,925,927) executed in the application being changed, deactivate a video window of the content playback player being played and activate a video window of the content playback player being switched. Accordingly, it is possible to perform seamless switching in response to switching between contents. In particular, the seamless switching can be performed in response to switching between heterogeneous contents.

Meanwhile, the signal processing device can be configured to execute a first content reproduction player corresponding to a first content in the application, and in response to execution of a second content reproduction player corresponding to a second content being required based on the switching input between the plurality of contents, execute the second content reproduction player in the application. Accordingly, it is possible to perform seamless switching in response to switching between contents.

Meanwhile, the signal processing device can execute the second content reproduction player during the execution of the first content reproduction player in the application in response to the switching input between the plurality of contents. Accordingly, it is possible to perform seamless switching in response to switching between contents.

Meanwhile, the signal processing device can be configured to execute the first content reproduction player and the second content reproduction player simultaneously according to the switching input between the plurality of contents, and then terminate the execution of the first content reproduction player, and execute the second content reproduction player. Accordingly, it is possible to perform seamless switching in response to switching between contents.

Meanwhile, the plurality of contents can include a plurality of broadcast channels, and the signal processing device can be configured to execute a first application for reproducing the plurality of broadcast channels, and change, in response to switching a content reproduction player being required upon the switching input between the plurality of contents, the content reproduction player executed in the first application. Accordingly, it is possible to perform seamless switching in response to switching between contents.

Meanwhile, the signal processing device can be configured to execute a first content reproduction player corresponding to a first broadcast channel in the first application, and in response to execution of a second content reproduction player corresponding to a second broadcast channel being required based on the switching input between the plurality of contents, execute the second content reproduction player in the first application. Accordingly, it is possible to perform seamless switching in response to switching between contents.

Meanwhile, the signal processing device can execute the second content reproduction player during the execution of the first content reproduction player in the first application in response to the switching input between the plurality of contents. Accordingly, it is possible to perform seamless switching in response to switching between contents.

Meanwhile, the signal processing device can be configured to execute the first content reproduction player and the second content reproduction player simultaneously according to the switching input between the plurality of contents, and then terminate the execution of the first content reproduction player, and execute the second content reproduction player. Accordingly, it is possible to perform seamless switching in response to switching between contents.

Meanwhile, the plurality of contents can include an image content and an audio content, and the signal processing device is configured to execute a first application for reproducing the image content and the audio content, and change, in response to switching a content reproduction player being required upon a switching input between the image content and the audio content, the content reproduction player executed in the first application. Accordingly, it is possible to perform seamless switching in response to switching between heterogeneous contents.

Meanwhile, the signal processing device can be configured to execute a first content reproduction player corresponding to an image content in the first application, and in response to execution of a second content reproduction player corresponding to the audio content being required, execute the second content reproduction player during the execution of the first content reproduction player, in response to the switching input between the image content and the audio content. Accordingly, it is possible to perform seamless switching in response to switching between contents.

Meanwhile, the signal processing device can be configured to execute a plurality of content reproduction player in the application, and execute a frame manager to operate based on a web, and executes a corresponding content reproduction player for each content. Accordingly, it is possible to perform seamless switching in response to switching between contents.

Meanwhile, the frame manager can be configured to update, restart, or re-execution of at least one of the plurality of content reproduction players. Accordingly, it is possible to perform seamless switching in response to switching between contents.

Meanwhile, the frame manager can be configured to continuously or simultaneously execute the plurality of content reproduction players in the application based on an inline frame based on the web. Accordingly, it is possible to perform seamless switching in response to switching between contents.

Meanwhile, the frame manager can be configured to receive a content switching request, and change the content reproduction player executed in the application in response to switching the content reproduction player being required according to the content switching request. Accordingly, it is possible to perform seamless switching in response to switching between contents.

Meanwhile, the frame manager can be configured to receive the content switching request, and, in response to switching the content reproduction player being required according to the content switching request, execute at least two content reproduction players during a predetermined period. Accordingly, it is possible to perform seamless switching in response to switching between contents.

Meanwhile, the signal processing device can be configured to change an object related to reproduction of a content in response to the content reproduction player being switched. Accordingly, it is possible to perform seamless switching in response to switching between contents.

Meanwhile, the signal processing device can be configured to execute a plurality of content reproduction player in the application in response to executing the application, and stop outputting a first image signal based on the first content reproduction player being executed, and output a second image signal based on the second content reproduction player being executed, upon the switching input between the plurality of contents. Accordingly, it is possible to perform seamless switching in response to switching between contents.

Meanwhile, the signal processing device can be configured to execute the remaining content reproduction players other than some content reproduction players, in response to some content reproduction players among the plurality of content reproduction players in the application being not executed during a set period. Accordingly, it is possible to perform seamless switching in response to switching between contents.

Meanwhile, the signal processing device can be configured to set a priority based on at least one of a driving time, the number of channels, a recent usage history, a processor usage rate, or a memory usage rate of the plurality of content reproduction players in the application, and selectively execute some of the plurality of content reproduction players in response to executing the application based on the set priority. Accordingly, it is possible to perform seamless switching in response to switching between contents.

Meanwhile, the signal processing device can be configured to set the content reproduction player executed in the application based on a first content list for a first user, and change the content reproduction player executed in the application based on a second content list for a second user. Accordingly, it is possible to perform seamless switching in response to switching between contents.

Meanwhile, the signal processing device can be configured to set the number of content reproduction players executed in the application as a first number based on the first content list for the first user, and set the number of content reproduction players executed in the application as a second number based on the second content list for the second user. Accordingly, it is possible to perform seamless switching in response to switching between contents.

While the preferred embodiments of the present disclosure have been illustrated and described above, the present disclosure is not limited to the aforementioned specific embodiments, various modifications can be made by a person with ordinary skill in the technical field to which the present disclosure pertains without departing from the subject matters of the present disclosure that are claimed in the claims, and these modifications should not be appreciated individually from the technical spirit or prospect of the present disclosure.

## Claims

1. An image display apparatus (100) comprising:
a display (180);
a content receiver (105) configured to receive a plurality of contents; and
a signal processing device (170) configured to output an image signal to the display,
wherein the signal processing device (170) is configured to
execute an application (910) for reproducing the plurality of contents,
in response to switching a content reproduction player being required upon a switching input between the plurality of contents, change a content reproduction player (921,923,925,927) executed in the application,
wherein the signal processing device (170) is configured to, in response to the content reproduction player (921,923,925,927) executed in the application being changed, deactivate a video window of the content playback player being played and activate a video window of the content playback player being switched.

2. The image display apparatus of claim 1, wherein the signal processing device (170) is configured to
execute a first content reproduction player corresponding to a first content in the application, and
in response to execution of a second content reproduction player corresponding to a second content being required based on the switching input between the plurality of contents, execute the second content reproduction player in the application.

3. The image display apparatus of claim 1, wherein the signal processing device (170) is configured to execute the second content reproduction player during the execution of the first content reproduction player in the application in response to the switching input between the plurality of contents.

4. The image display apparatus of any one of claims 1 to 3, wherein the plurality of contents include a plurality of broadcast channels, and
the signal processing device (170) is configured to
execute a first application for reproducing the plurality of broadcast channels, and
change, in response to switching a content reproduction player being required upon the switching input between the plurality of contents, the content reproduction player executed in the first application.

5. The image display apparatus of claim 4, wherein the signal processing device (170) is configured to
execute a first content reproduction player corresponding to a first broadcast channel in the first application, and
in response to execution of a second content reproduction player corresponding to a second broadcast channel being required based on the switching input between the plurality of contents, execute the second content reproduction player in the first application.

6. The image display apparatus of claim 4, wherein the signal processing device (170) is configured to execute the second content reproduction player during the execution of the first content reproduction player in the first application in response to the switching input between the plurality of contents.

7. The image display apparatus of any one of claims 1 to 6, wherein the plurality of contents include an image content and an audio content, and
the signal processing device (170) is configured to
execute a first application for reproducing the image content and the audio content, and
change, in response to switching a content reproduction player being required upon a switching input between the image content and the audio content, the content reproduction player executed in the first application.

8. The image display apparatus of claim 7, wherein the signal processing device (170) is configured to
execute a first content reproduction player corresponding to an image content in the first application, and
in response to execution of a second content reproduction player corresponding to the audio content being required, execute the second content reproduction player during the execution of the first content reproduction player, in response to the switching input between the image content and the audio content.

9. The image display apparatus of any one of claims 1 to 8, wherein the signal processing device (170) is configured to
execute a plurality of content reproduction player in the application, and
execute a frame manager to operate based on a web, and executes a corresponding content reproduction player for each content.

10. The image display apparatus of claim 9, wherein the frame manager (915) is configured to continuously or simultaneously execute the plurality of content reproduction players in the application based on an inline frame based on the web.

11. The image display apparatus of claim 9, wherein the frame manager (915) is configured to receive a content switching request, and change the content reproduction player executed in the application in response to switching the content reproduction player being required according to the content switching request.

12. The image display apparatus of any one of claims 1 to 11, wherein the signal processing device (170) controls to change an object related to reproduction of a content in response to the content reproduction player being switched.

13. The image display apparatus of any one of claims 1 to 12, wherein the signal processing device (170) is configured to
execute a plurality of content reproduction player in the application in response to executing the application, and
stop outputting a first image signal based on the first content reproduction player being executed, and output a second image signal based on the second content reproduction player being executed, upon the switching input between the plurality of contents.

14. The image display apparatus of any one of claims 1 to 13, wherein the signal processing device (170) is configured to set a priority based on at least one of a driving time, the number of channels, a recent usage history, a processor usage rate, or a memory usage rate of the plurality of content reproduction players in the application, and selectively execute some of the plurality of content reproduction players in response to executing the application based on the set priority.

15. The image display apparatus of any one of claims 1 to 14, wherein the signal processing device (170) is configured to
set the content reproduction player executed in the application based on a first content list for a first user, and
change the content reproduction player executed in the application based on a second content list for a second user.
